(19) Europäisches Patentamt
European Patent Office
Office européen des brevets

(11) EP 4 678 812 A2

(12) EUROPEAN PATENT APPLICATION

(43) Date of publication:
**14.01.2026 Bulletin 2026/03**

(21) Application number: **25171656.9**

(22) Date of filing: **22.04.2025**

(51) International Patent Classification (IPC):
***D06P 5/30*** *(2006.01)* ***B41J 3/407*** *(2006.01)*
***C09D 11/54*** *(2014.01)* ***D06P 1/52*** *(2006.01)*
*D06P 5/22* *(2006.01)*

(52) Cooperative Patent Classification (CPC):
**D06P 5/30; B41J 3/4078; C09D 11/54; D06P 1/525; D06P 1/5278; D06P 1/5292;** D06P 5/225

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **23.04.2024 JP 2024069688**

(71) Applicant: **KONICA MINOLTA, INC.**
**Tokyo 100-7015 (JP)**

(72) Inventor: **ONAKA, Kenichi**
**Tokyo, 100-7015 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **INKJET TEXTILE PRINTING METHOD, INKJET TEXTILE PRINTING INK SET, AND INKJET TEXTILE PRINTING APPARATUS**

(57) Disclosed is an inkjet textile printing method including ejecting a pigment ink, a first treatment liquid, and a second treatment liquid onto a textile by an inkjet head in an order of the first treatment liquid, the pigment ink, and the second treatment liquid to attach the first treatment liquid, the pigment ink, and the second treatment liquid to a same place without drying. The first treatment liquid retains at least one of the pigment ink and the second treatment liquid on a surface of the textile; the first treatment liquid contains a water-soluble cationic flocculant; the second treatment liquid contains a silicone acrylic resin; the pigment ink contains a pigment, an anionic pigment dispersant, anionic resin particles having a film elongation of 600% to 1600%, and a nonionic surfactant; and a mass ratio of the nonionic surfactant to a total amount of the pigment, the anionic pigment dispersant, and the anionic resin particles is 0.022 or more and 0.096 or less.

EP 4 678 812 A2

## Description

BACKGROUND OF THE INVENTION

TECHNICAL FIELD

The present invention relates to an inkjet textile printing method, an ink set for inkjet textile printing, and an inkjet textile printing apparatus. In particular, the present invention relates to an inkjet textile printing method, an ink set for inkjet textile printing, and an inkjet textile printing apparatus that can form an image excellent in image density and wet friction fastness on a textile.

DESCRIPTION OF RELATED ART

Conventionally, an inkjet textile printing method using an inkjet recording apparatus (printing apparatus) has been used as a method for forming images such as letters, pictures, and patterns on a textile such as a woven textile or a nonwoven textile (e.g., see JP 2022-3175A, 2017-132946A, and 2023-179259A). In such an inkjet textile printing method, usually, a method is common in which a pre-treatment liquid is used to flocculate a pigment ink so that the ink stays on the surface of the textile, thereby improving color density. Hereinafter, a "pigment ink" used in an inkjet textile printing method is also referred to simply as "ink".

JP 2022-3175A discloses an inkjet textile printing method in which a pre-treatment liquid, an ink, and a post-treatment liquid are ejected onto a textile printing target. The pre-treatment liquid contains binder resin particles containing a cationic resin, the ink contains a pigment and an anionic dispersion, and the post-treatment liquid contains a lubricant. Thus, the invention described in JP 2022-3175A is intended to form a printed product excellent in image density and wet fastness and to suppress a decrease in the tactile feel of the printed product.

JP 2017-132946A describes an inkjet textile printing recording method including a step of applying a pre-treatment liquid to a textile and a step of forming an image. The step of forming an image is a step of applying a color ink composition and a clear ink composition to the textile while both ink compositions are wet. In addition, the pre-treatment liquid contains a reactant, and the color ink composition contains a resin that has flocculating properties due to the reactant. In addition, the clear ink composition contains a resin that does not have flocculating properties due to the reactant. As a result, the invention described in JP 2017-132946A is intended to avoid nozzle clogging and a decrease in the storage stability of the ink due to an increase in the viscosity of the ink composition, and to improve the adhesiveness and color developability of the image.

JP 2023-179259A describes an image forming method (textile printing method) including a step of applying an ink to a textile by an inkjet method and a step of applying a post-treatment liquid to the ink applied to the textile. The ink contains a pigment and resin particles, and the post-treatment liquid contains a lubricant. The solubility parameters of the resin constituting the resin particles and the lubricant have a specific relationship. Thus, the invention described in JP 2023-179259A is intended to maintain high friction fastness over a long period of time without impairing the texture of the textile.

SUMMARY OF THE INVENTION

However, in the above-described conventional textile printing methods, further improvement has been required in terms of the image density and the wet friction fastness of a printed textile to be formed.

The present invention has been made in consideration of the above-mentioned problems and situations. It is an object of the present invention to provide an inkjet textile printing method, an ink set for inkjet textile printing, and an inkjet textile printing apparatus that can form an image excellent in image density and wet friction fastness on a textile.

To achieve at least one of the abovementioned objects, an inkjet textile printing method reflecting one aspect of the present invention comprises: ejecting a pigment ink, a first treatment liquid, and a second treatment liquid onto a textile by an inkjet head in an order of the first treatment liquid, the pigment ink, and the second treatment liquid to attach the first treatment liquid, the pigment ink, and the second treatment liquid to a same place without drying, wherein: the first treatment liquid retains at least one of the pigment ink and the second treatment liquid on a surface of the textile; the first treatment liquid contains a water-soluble cationic flocculant; the second treatment liquid contains a silicone acrylic resin; the pigment ink contains a pigment, an anionic pigment dispersant, anionic resin particles having a film elongation of 600% to 1600%, and a nonionic surfactant; and a mass ratio of the nonionic surfactant to a total amount of the pigment, the anionic pigment dispersant, and the anionic resin particles is 0.022 or more and 0.096 or less.

To achieve at least one of the abovementioned objects, an ink set for inkjet textile printing reflecting another aspect of the present invention comprises: a pigment ink; a first treatment liquid; and a second treatment liquid, wherein: the inkjet set is used for the inkjet textile printing in which the pigment ink, the first treatment liquid, and the second

treatment liquid are ejected onto a textile by an inkjet head in an order of the first treatment liquid, the pigment ink, and the second treatment liquid to attach the first treatment liquid, the pigment ink, and the second treatment liquid to a same place without drying; the first treatment liquid retains at least one of the pigment ink and the second treatment liquid on a surface of the textile; the first treatment liquid contains a water-soluble cationic flocculant; the second treatment liquid contains a silicone acrylic resin; the pigment ink contains a pigment, an anionic pigment dispersant, anionic resin particles having a film elongation of 600% to 1600%, and a nonionic surfactant; and a mass ratio of the nonionic surfactant to a total amount of the pigment, the anionic pigment dispersant, and the anionic resin particles is 0.022 or more and 0.096 or less.

To achieve at least one of the abovementioned objects, an inkjet textile printing apparatus reflecting still another aspect of the present invention comprises: an inkjet unit that ejects a pigment ink onto a textile while the inkjet unit is moved in a main scanning direction; a first treatment liquid ejection head that is moved with the inkjet unit in the main scanning direction and ejects a first treatment liquid onto the textile; a second treatment liquid ejection head that is moved with the inkjet unit in the main scanning direction and ejects a second treatment liquid onto the textile, the first treatment liquid ejection head and the second treatment liquid ejection head being disposed on both sides of the inkjet unit in the main scanning direction; and an inkjet head that includes the inkjet unit, the first treatment liquid ejection head, and the second treatment liquid ejection head, wherein: the pigment ink, the first treatment liquid, and the second treatment liquid are ejected onto the textile by the inkjet head in an order of the first treatment liquid, the pigment ink, and the second treatment liquid to attach the first treatment liquid, the pigment ink, and the second treatment liquid to a same place without drying; the first treatment liquid retains at least one of the pigment ink and the second treatment liquid on a surface of the textile; the first treatment liquid contains a water-soluble cationic flocculant; the second treatment liquid contains a silicone acrylic resin; the pigment ink contains a pigment, an anionic pigment dispersant, anionic resin particles having a film elongation of 600% to 1600%, and a nonionic surfactant; and a mass ratio of the nonionic surfactant to a total amount of the pigment, the anionic pigment dispersant, and the anionic resin particles is 0.022 or more and 0.096 or less.

## BRIEF DESCRIPTION OF THE DRAWINGS

The advantages and features provided by one or more embodiments of the invention will become more fully understood from the detailed description given hereinbelow and the appended drawings which are given by way of illustration only, and thus are not intended as a definition of the limits of the present invention, wherein:

FIG. 1 is a schematic diagram illustrating an embodiment of an inkjet textile printing apparatus;
FIG. 2 is a plan view of an inkjet unit, a first treatment liquid ejection head, and a second treatment liquid ejection head, which are mounted on a carriage;
FIG. 3 is a flowchart illustrating steps of applying treatment liquids and a pigment ink in an inkjet textile printing method according to the present embodiment; and
FIG. 4 is a diagram illustrating a schematic configuration of an inkjet textile printing apparatus in which a textile is attached to a conveyance belt to be conveyed.

## DETAILED DESCRIPTION

Hereinafter, one or more embodiments of the present invention will be described with reference to the drawings. However, the scope of the invention is not limited to the disclosed embodiments. One embodiment of an inkjet textile printing method according to the present invention is an inkjet textile printing method that includes ejecting a pigment ink, a first treatment liquid, and a second treatment liquid onto a textile by an inkjet head in the order of the first treatment liquid, the pigment ink, and the second treatment liquid. The inkjet textile printing method according to the present embodiment is an inkjet textile printing method in which the first treatment liquid, the pigment ink, and the second treatment liquid are attached to the same place without drying. Hereinafter, the inkjet textile printing method is also simply referred to as a "textile printing method".

In the textile printing method according to the present embodiment, the first treatment liquid retains at least one of the pigment ink and the second treatment liquid on the surface of the textile. The first treatment liquid is preferably one that retains at least pigment ink on surface of the textile. The first treatment liquid contains a water-soluble cationic flocculant, and the second treatment liquid contains a silicone acrylic resin. The pigment ink contains a pigment, an anionic pigment dispersant, "anionic resin particles having a film elongation of 600 to 1600%", and a nonionic surfactant. Further, the mass ratio of the nonionic surfactant to the "total amount of the pigment, the anionic pigment dispersant, and the anionic resin particles" is 0.022 or more and 0.096 or less. The above-described features are technical features common to or corresponding to the following embodiments.

Although the realization mechanism or action mechanism of the effects of the present invention is not clear, the inventors infer the mechanism as follows.

When anionic resin particles having a film elongation of 600 to 1600% are contained in the pigment ink, even

when a force is applied to the interface between the textile and a "coating film formed by textile printing", the coating film is deformed so as to be stretched. The anionic resin particles having a film elongation of 600% to 1600% are relatively soft particles. Therefore, it is presumed that peeling of the coating film from the textile is suppressed and wet friction fastness is improved. Hereinafter, the "coating film formed by textile printing" is a film formed on the textile by ejecting the first treatment liquid, the pigment ink, and the second treatment liquid onto the textile, and is a film that forms an image. Hereinafter, the "coating film formed by textile printing" may be simply referred to as a "coating film".

Furthermore, the first treatment liquid, the pigment ink, and the second treatment liquid are ejected onto the textile in this order. Therefore, a flocculate is first generated by mixing the first treatment liquid and the pigment ink. Then, the second treatment liquid containing a silicone acrylic resin is applied where the flocculate has been generated. Then, the silicone acrylic resin wets and spreads over the textile surface together with the flocculate. It is presumed that the flocculate spread over the textile surface in this manner fills a portion of the textile to which no pigment ink has been attached, thus improving image density. Furthermore, since the silicone acrylic resin wets and spreads over the textile surface together with the flocculate, the area of the contact portion between the coating film formed on the textile and the textile increases. Hereinafter, "the area of the contact portion between the coating film formed on the textile and the textile" may be simply referred to as "the contact area". Thus, it is presumed that the wet friction fastness is improved by increasing the contact area between the coating film and the textile. Furthermore, it is presumed that the silicone acrylic resin and the anionic resin particles are compatibilized with each other after heating, thereby improving the wet friction fastness.

Since the mass ratio of the nonionic surfactant to the "total amount of the pigment, the anionic pigment dispersant, and the anionic resin particles" is 0.022 or more and 0.096 or less, it is presumed that the following effects are obtained. Hereinafter, the "mass ratio of the nonionic surfactant to the total amount of the pigment, the anionic pigment dispersant, and the anionic resin particles" may also be referred to as the "ratio of the nonionic surfactant". It is presumed that by setting the ratio of the nonionic surfactant to be 0.022 or more and 0.096 or less, ejection property, that is, property of being ejected from an inkjet head is improved even when the anionic resin particles having a film elongation of 600% to 1600% are used. In addition, it is presumed that, by setting the "ratio of the nonionic surfactant" to be in the above-described range, the nonionic surfactant does not inhibit ionic bond between the anionic resin particles or the like and the cationic flocculant or the like, and therefore, the wet friction fastness is favorably maintained.

According to the textile printing method of the present embodiment, it is possible to form an image having excellent image density and wet friction fastness on a textile. That is, as described above, the first treatment liquid, the pigment ink, and the second treatment liquid are ejected onto a textile in this order. Therefore, a flocculate is first generated by mixing the first treatment liquid and the pigment ink. Then, the second treatment liquid containing a silicone acrylic resin is applied where the flocculate has been generated. Then, the silicone acrylic resin wets and spreads over the textile surface together with the flocculate. Since the flocculate spread on the textile surface in this manner fills a portion on the textile to which no pigment ink has been attached, an image having excellent image density can be formed on the textile. Furthermore, as described above, when anionic resin particles having a film elongation of 600 to 1600% are contained in the pigment ink, even when a force is applied to the interface between the textile and the "coating film formed by textile printing", the coating film is deformed so as to be stretched. Therefore, the peeling of the coating film from the textile is suppressed, and an image having excellent wet friction fastness can be formed on the textile. Furthermore, as described above, the silicone-acrylic resin wets and spreads over the textile surface together with the flocculate, thereby increasing the contact area between the textile and the coating film formed on the textile. Thus, by increasing the contact area between the coating film and the textile, an image having excellent wet friction fastness can be formed on the textile. Furthermore, since the silicone acrylic resin and the anionic resin particles are compatibilized with each other after heating, an image having excellent wet friction fastness can be formed on the textile. In addition, as described above, by setting the "ratio of the nonionic surfactant" to be 0.022 or more and 0.096 or less, the property of being ejected from an inkjet head can be improved even when the anionic resin particles having a film elongation of 600% to 1600% are used. Furthermore, by setting the "ratio of the nonionic surfactant" to 0.022 or more and 0.096 or less, the ionic bond between the anionic resin particles or the like and the cationic flocculant or the like is not inhibited, and therefore, an image having excellent wet friction fastness can be formed on the textile.

In the textile printing method according to the present embodiment, the nonionic surfactant is preferably an acetylene-based surfactant. This configuration is advantageous in that the ejection property (property of being ejected from the inkjet head) is improved and an image excellent in image density and wet friction fastness can be formed on the textile. It is thought that the density is increased by the fact that even after ejection, the textile is filled by wetting and spreading in the XY directions due to good re-absorption to the particles. It is also thought that the wet friction is increased by an increase in the contact area between the textile and the coating film.

In the textile printing method according to the present embodiment, the cationic flocculant is preferably a cationic polymer. This configuration is advantageous in that an image excellent in image density and wet friction fastness can be formed on the textile. When the cationicity is too strong, the wetting and spreading in the XY directions is suppressed, and the density and the wet friction fastness may be deteriorated. On the other hand, when the cationicity is too weak, the ink easily permeates in the Z direction. However, it is thought that when a polymer is used, a certain degree of flocculation

diameter is easily formed, and thus the image density is increased.

In the textile printing method according to the present embodiment, the pigment ink preferably contains a silicone acrylic resin. This configuration is advantageous in that an image excellent in image density and wet friction fastness can be formed on the textile. It is thought that since the wetting and spreading in the XY directions is maintained even after ejection, the textile is filled by the wetting and spreading, which increases the density and the contact area between the textile and the coating film, thereby increasing the wet friction. In addition, it is thought that the silicone acrylic resin particles and the anionic resin particles are compatible with each other after heating, and thus the wet friction fastness is improved.

More preferably, the anionic pigment dispersant contains a block copolymer, the block copolymer contains an ABA-type block copolymer including two hydrophilic blocks A disposed at both ends of the molecule and a hydrophobic block B disposed between the two hydrophilic blocks, and the hydrophilic block A interacts or reacts with the cationic flocculant. This configuration is advantageous in that an image excellent in image density and wet friction fastness can be formed on the textile. Since the blocks have a large number of moieties that interact with or react with a flocculant, interaction with or reaction with the flocculant is likely to occur, and thus higher wet friction fastness can be obtained.

In the textile printing method according to the present embodiment, the anionic resin particles are preferably a urethane resin. This configuration is advantageous in that an image excellent in image density and wet friction fastness can be formed on the textile. This is because the polyurethane resin is excellent in adhesiveness to a base material and has high wet friction fastness. In addition, the average particle size of the resin particles is preferably 130 nm or less. As a result, a coating film can be formed so as to fill the gaps between the pigment and the medium and between the pigments, and higher wet friction fastness can be obtained.

The pigment ink more preferably contains a crosslinking agent. This configuration is advantageous in that an image more excellent in image density and wet friction fastness can be formed on the textile. The wet friction fastness of a recorded product is improved by the progress of a crosslinking reaction between the crosslinking agents, a crosslinking reaction with the resin particles and the dispersant contained in the ink composition, and a crosslinking reaction with a reaction point such as a hydroxyl group in the textile.

The cationic polymer is preferably a compound having a quaternary ammonium group. The compound is a polymer. This configuration is advantageous in that an image more excellent in image density and wet friction fastness can be formed on the textile. When the ammonium base is less than quaternary, the textile may turn yellow when dried by heating.

Next, one embodiment of an ink set for inkjet textile printing according to the present invention is an ink set for inkjet textile printing that includes a pigment ink, a first treatment liquid, and a second treatment liquid. Hereinafter, it may be simply referred to as "ink set". In the ink set according to the present embodiment, the pigment ink, the first treatment liquid, and the second treatment liquid are ejected onto a textile by an inkjet head in the order of the first treatment liquid, the pigment ink, and the second treatment liquid. The inkjet set is used for inkjet textile printing in which the first treatment liquid, the pigment ink, and the second treatment liquid are attached to the same place without drying. Here, the first treatment liquid retains at least one of the pigment ink and the second treatment liquid on the surface of the textile. The first treatment liquid contains a water-soluble cationic flocculant and the second treatment liquid contains a silicone acrylic resin. Furthermore, the pigment ink contains a pigment, an anionic pigment dispersant, "anionic resin particles having a film elongation of 600 to 1600%", and a nonionic surfactant. In addition, the ratio of the nonionic surfactant to "the total amount of the pigment, the anionic pigment dispersant, and the anionic resin particles" is 0.022 or more and 0.096 or less. With such a configuration, the ink set is used in the textile printing method according to the present embodiment, and the effects of the textile printing method according to the present embodiment are obtained.

Next, one embodiment of an inkjet textile printing apparatus according to the present invention includes an inkjet unit, a first treatment liquid ejection head, and a second treatment liquid ejection head. The inkjet unit ejects a pigment ink onto a textile while the inkjet unit is moved in a main scanning direction. The first treatment liquid ejection head is moved with the inkjet unit in the main scanning direction and ejects a first treatment liquid onto the textile. The second treatment liquid ejection head is moved with the inkjet unit in the main scanning direction and ejects a second treatment liquid onto the textile. The first treatment liquid ejection head and the second treatment liquid ejection head are disposed on both sides of the inkjet unit in the main scanning direction. The inkjet textile printing apparatus includes an inkjet head that includes the inkjet unit, the first treatment liquid ejection head, and the second treatment liquid ejection head. The inkjet textile printing apparatus according to the present embodiment ejects the pigment ink, the first treatment liquid, and the second treatment liquid onto a textile by an inkjet head in the order of the first treatment liquid, the pigment ink, and the second treatment liquid. Then, the first treatment liquid, the pigment ink, and the second treatment liquid are attached to the same place without drying. The first treatment liquid retains at least one of the pigment ink and the second treatment liquid on the textile surface. The first treatment liquid contains a water-soluble cationic flocculant, and the second treatment liquid contains a silicone acrylic resin. The pigment ink contains a pigment, an anionic pigment dispersant, anionic resin particles having a film elongation of 600 to 1600%, and a nonionic surfactant. The ratio of the nonionic surfactant to "a total amount of the pigment, the anionic pigment dispersant, and the anionic resin particles" is 0.022 or more and 0.096 or less. With such a configuration, the inkjet textile printing apparatus is used in the textile printing method according to the present

embodiment, and the effects of the textile printing method according to the present embodiment are obtained.

Hereinafter, the present invention, constituent elements thereof, and forms and aspects for carrying out the present invention will be described in detail. In the present application, "to" representing a numerical range is used to mean that numerical values described before and after "to" are included as a lower limit value and an upper limit value.

[Inkjet Textile Printing Method]

Next, the inkjet textile printing method according to the present embodiment will be described in more detail. The textile printing method according to the present embodiment is a textile printing method for applying the first treatment liquid, the second treatment liquid, and the pigment ink by an inkjet head. Hereinafter, the first treatment liquid and the second treatment liquid may be collectively and simply referred to as "treatment liquids".

As described above, the inkjet textile printing method according to the present embodiment is a textile printing method in which the first treatment liquid, the pigment ink, and the second treatment liquid are ejected in this order onto a textile by an inkjet head to attach the first treatment liquid, the pigment ink, and the second treatment liquid to the same place without drying. The inkjet textile printing method is characterized by the pigment ink, the first treatment liquid, and the second treatment liquid.

The steps of applying the treatment liquids and the pigmented ink include, for example, a first treatment liquid application step S01, a pigmented ink application step S02, and a second treatment liquid application step S03, as in a flowchart illustrated in FIG. 3. Here, the first treatment liquid application step is a step of ejecting and attaching the first treatment liquid to the textile. The second treatment liquid application step is a step of ejecting and attaching the second treatment liquid to the textile. The pigment ink application step is a step of ejecting and attaching the pigment ink to the textile. Then, after a textile conveyance step S04 of conveying the textile in a conveyance direction Y is performed, an image is formed on the textile by repeating S01, S02, S03, and S04 described above. Here, FIG. 3 is a flowchart illustrating steps of applying the treatment liquids and the pigment ink in the inkjet textile printing method according to the present embodiment.

Hereinafter, the first treatment liquid, the second treatment liquid, the pigment ink, and the like used in the textile printing method according to the present embodiment will be described.

< First Treatment Liquid >

The first treatment liquid contains a water-soluble cationic flocculant.

(Water-soluble Cationic Flocculant)

The water-soluble cationic flocculant flocculates a pigment and the like contained in the ink. The flocculation by the water-soluble cationic flocculant is based on an electrical action. Hereinafter, the water-soluble cationic flocculant may be simply referred to as a cationic flocculant.

Examples of the cationic flocculant that flocculates by an electrical action include compounds having a cationic group and polyvalent metal salts. These cationic flocculants can interact or react with the anionic pigment dispersant contained in the pigment ink.

Examples of the cationic group in the compounds having a cationic group include a secondary amino group, a tertiary amino group, and a quaternary ammonium group. Examples of the compounds having a cationic group include cationic resins and cationic surfactants, with cationic resins being preferred. The cationic resin can also be referred to as a cationic polymer.

Examples of the cationic resin include a cationic urethane resin, a cationic olefin resin, and a cationic alkylamine resin. Examples of commercially available products include MPT-60 (manufactured by Mitsubishi Pencil Company, Ltd.), UNISENCE KHE100L (manufactured by Senka Corporation), and MZ-477 (an urethane resin, manufactured by Takamatsu Oil & Fat Co., Ltd.). Among them, as the cationic resin, a cationic alkylamine resin MPT-60 and UNISENCE KHE100L (manufactured by Senka Corporation) are preferable. They make it easier to cause an interaction or a reaction with the block copolymer.

The polyvalent metal salt may be a water-soluble compound having a divalent or higher polyvalent metal ion and an anion to be bonded thereto. Examples of the polyvalent metal ion include a divalent metal ion such as $Ca^{2+}$, $Cu^{2+}$, $Ni^{2+}$, $Mg^{2+}$, $Zn^{2}$, and $Ba^{2+}$, and a trivalent metal ion such as $Al^{3+}$, $Fe^{3+}$, and $Cr^{3+}$. Examples of the anion include $Cl^{-}$, $I^{-}$, Br, $SO_4^{2-}$, $ClO^{3-}$, $NO^{3-}$ and $HCOO^{-}$, $CH_3COO^{-}$. Examples of such polyvalent metal salts include: zinc acetate dihydrate, magnesium nitrate, calcium chloride, magnesium chloride, aluminum chloride, magnesium sulfate; and metal salts of organic acids such as calcium salts, magnesium salts, nickel salts and aluminum salts of acetic acid and the like. Among them, calcium salts and magnesium salts are preferable, and calcium nitrate and calcium chloride are preferable.

Among them, a compound having a cationic group or a metal salt of an organic acid is preferable, and a

compound having a cationic group is more preferable.

The content of the cationic flocculant in the first treatment liquid is not particularly limited but is preferably 0.1 to 15% by mass and more preferably 0.5 to 8% by mass relative to the first treatment liquid.

< Second Treatment Liquid >

The second treatment liquid contains a silicone acrylic resin.

(Silicone Acrylic Resin)

The silicone acrylic resin is a silicone acrylic resin present in a state of being dispersed as resin particles in an aqueous medium. The second treatment liquid is an aqueous treatment liquid containing water and a suitable water-soluble organic solvent. Therefore, the silicone acrylic resin is also contained as resin particles in the second treatment liquid. Whether the silicone acrylic resin is present as resin particles can be confirmed by determining whether there is a peak corresponding to the silicone acrylic resin when the dispersed particle size (Z average) of the second treatment liquid is measured by a particle size measuring apparatus. An example of the particle size measuring apparatus includes "Zetasizer Nano S90" manufactured by Malvern Panalytical Ltd.

The silicone acrylic resin is a copolymer containing a structural unit derived from a polyorganosiloxane and a structural unit derived from another polymerizable monomer (including a macromonomer) copolymerizable with the structural unit derived from a polyorganosiloxane.

The copolymer may be, for example, a graft copolymer in which the structural unit derived from a polyorganosiloxane and a (meth)acrylic acid ester or the like (polymerizable monomer) are graft-polymerized. Furthermore, the copolymer may be, for example, a copolymer in which a side chain or an end of a (meth)acrylic resin or the like is modified with a polyorganosiloxane. Among them, a graft copolymer in which a (meth)acrylic acid ester or the like is graft-polymerized to a polymer containing the structural unit derived from a polyorganosiloxane is preferable. Such a graft copolymer has a structure in which the polyorganosiloxane portion serves as a trunk portion and the (meth)acrylic acid ester or the like serves as a branch portion and thus is more compatible with a binder resin contained in the ink layer, which is preferable. Note that the form of the copolymerization is not limited to graft copolymerization and may be random copolymerization or block copolymerization.

The silicone acrylic resin may also include an ionic group. The ionic group of the silicone acrylic resin may be an ionic group that forms a pair with an ionic group of the textile (or an ionic group of the flocculant attached to the textile). For example, since the cationic flocculant usually has a cationic group, the silicone acrylic resin may be an anionic silicone acrylic resin having an anionic group. Examples of the anionic group include a carboxy group, a sulfonic acid group and a phosphonic acid group.

That is, the silicone acrylic resin preferably contains a structural unit derived from a polyorganosiloxane having a radical polymerizable group and a structural unit derived from another polymerizable monomer copolymerizable with the structural unit derived from a polyorganosiloxane.

Examples of the polyorganosiloxane having a radical polymerizable group include polyorganosiloxanes represented by the following Formula (1).

[Chemical Formula 1]

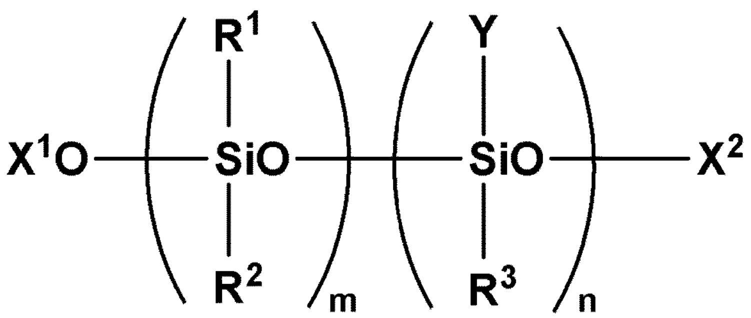

···EQUATION (1)

In the above Formula (1), $R^1$, $R^2$ and $R^3$ are each independently a hydrocarbon group having 1 to 10 carbon atoms.

In the above formula (1), Y is a radical polymerizable group selected from the group consisting of a vinyl group, an allyl group, and a $\gamma$-(meth)acryloxypropyl group.

In the above Formula (1), $X^1$ and $X^2$ are each independently a hydrogen atom, an alkyl group having 1 to 10

carbon atoms, or a group represented by Formula (2): $SiR^4R^5R^6$. m is an integer of 1 to 10000. n is an integer of 1 or more. The siloxane chain may be branched.

In the above Formula (2): $SiR^4R^5R^6$, $R^4$ and $R^5$ are each independently a hydrocarbon group having 1 to 10 carbon atoms. $R^6$ is a radical polymerizable group selected from the group consisting of a vinyl group, an allyl group, and a γ-(meth)acryloxypropyl group, or a hydrocarbon group having 1 to 10 carbon atoms.

Examples of the other polymerizable monomer include (meth)acrylic acid esters. In the present specification, (meth)acryl represents acryl, methacryl, or both of them.

The (meth)acrylic acid ester is an alkyl ester, a hydroxyalkyl ester, or an alkoxyalkyl ester of (meth)acrylic acid. Examples of the (meth)acrylic acid ester include methyl (meth)acrylate, ethyl (meth)acrylate, isopropyl (meth)acrylate, n-propyl (meth)acrylate, n-butyl (meth)acrylate, and isobutyl (meth)acrylate. Other examples of the (meth)acrylic acid ester include 2-ethylhexyl (meth)acrylate, isooctyl (meth)acrylate, n-octyl (meth)acrylate, 2-hydroxyethyl (meth)acrylate, and 2-methoxyethyl (meth)acrylate. Among them, methyl methacrylate and 2-hydroxyethyl methacrylate are preferable.

The content of the structural unit derived from a polyorganosiloxane in the silicone acrylic resin is preferably 50% by mass or more, and more preferably 60% by mass or more and 95% by mass or less relative to the total amount of the structural units constituting the silicone resin. When the content of the structural unit derived from a polyorganosiloxane is 50% by mass or more, the effect of reducing the friction coefficient derived from the polysiloxane can be more easily obtained, and the wet friction fastness can be further improved. When the content of the structural unit derived from a polyorganosiloxane is 95% by mass or less, affinity with another compound or another resin is more likely to be increased.

The silicone acrylic resin may further include a structural unit derived from a polymerizable monomer other than the above-described polymerizable monomers. Examples of the polymerizable monomer other than those described above include styrenes and ethylenically unsaturated carboxylic acids such as (meth)acrylic acid. For example, from the viewpoint of exhibiting anionic properties, the silicone acrylic resin may further include a structural unit derived from an ethylenically unsaturated carboxylic acid such as (meth)acrylic acid.

The graft copolymerization can be performed by a known method. For example, the graft copolymerization can be performed by emulsifying and dispersing a polyorganosiloxane represented by Formula (1) above and a copolymerizable compound such as a (meth)acrylic acid ester in water and polymerizing the mixture in the presence of a radical polymerization initiator.

Examples of commercially available products of the silicone (meth)acrylic copolymers include CHALINE LC190, CHALINE R-170, R170S, CHALINE FE-230N, FE-502, and R-170BX (manufactured by Nissin Chemical Industry Co., Ltd.).

Although the second treatment liquid contains the silicone acrylic resin described above, for example, when the amount of a surfactant is increased instead of the silicone acrylic resin in the second treatment liquid, ionic bond between an anion and a cation may be inhibited, and the wet friction may be deteriorated. In addition, when the amount of a surfactant is increased, the friction coefficient of the surface is also increased, and the dry friction may be deteriorated.

The content of the silicone acrylic resin in the second treatment liquid is not particularly limited. For example, the content of the silicone acrylic resin in the second treatment liquid is preferably 0.1 to 2.0% by mass and more preferably 0.3 to 1.0% by mass relative to the second treatment liquid. When the content is less than 0.1% by mass, the effects of the silicone acrylic resin may be less likely to be achieved. When the content is more than 2.0% by mass, the wet friction fastness may be deteriorated.

< Pigment Ink >

The pigment ink contains a pigment, an anionic pigment dispersant, anionic resin particles having a film elongation of 600 to 1600%, and a nonionic surfactant. Furthermore, the pigment ink preferably contains water. The pigment ink has a ratio of the nonionic surfactant (mass) to the "total amount (mass) of the pigment, the anionic pigment dispersant, and the anionic resin particles" of 0.022 or more and 0.096 or less.

(Pigment)

The pigment is not particularly limited, and examples thereof include organic pigments or inorganic pigments having the following numbers described in the Color Index.

Examples of a red or magenta pigment include Pigment Red 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, 254, 257, Pigment Violet 3, 19, 23, 29, 30, 37, 50, 88, Pigment Orange 13, 16, 20, 34, 36, and 43. The red or magenta pigment may be a mixed crystal.

Examples of a blue or cyan pigment include Pigment Blue 1, 15, 15:1, 15:2, 15:3, 15:4, 15:6, 16, 17-1, 22, 27, 28, 29, 36, 60.

Examples of a green pigment include Pigment Green 7, 26, 36, and 50.

Examples of a yellow pigment include Pigment Yellow 1, 3, 12, 13, 14, 17, 34, 35, 37, 55, 74, 81, 83, 93, 94, 95, 97, 108, 109, 110, 137, 138, 139, 153, 154, 155, 157, 166, 167, 168, 180, 185, and 193.

Examples of a black pigment include Pigment Black 7, 28, and 26.

Examples of commercially available pigments include Chromofine Yellow 2080, 5900, 5930, AF-1300, 2700L, Chromofine Orange 3700L, 6730, Chromofine Scarlet 6750, Chromofine Magenta 6880, 6886, 6891 N, 6790, 6887, Chromofine Violet RE, Chromofine Red 6820, 6830, Chromofine Blue HS-3, 5187, 5108, 5197, 5085N, SR-5020, 5026, 5050, 4920, 4927, 4937, 4824, 4933GN-EP, 4940, 4973, 5205, 5208, 5214, 5221, 5000P, Chromofine Green 2GN, 2GO, 2G-550D, 5310, 5370, 6830, Chromofine Black A-1103, Seikafast Yellow 10GH, A-3, 2035, 2054, 2200, 2270, 2300, 2400 (B), 2500, 2600, ZAY-260, 2700 (B), 2770, Seikafast Red 8040, C405 (F), CA120, LR-116, 1531B, 8060R, 1547, ZAW-262, 1537B, GY, 4R-4016, 3820, 3891, ZA-215, Seikafast Carmine 6B1476T-7, 1483LT, 3840, 3870, Seikafast Bordeaux 10B-430, Seikalight Rose R40, Seikalight Violet B800, 7805, Seikafast Maroon 460N, Seikafast Orange 900, 2900, Seikalight Blue C718, A612, Cyanine Blue 4933M, 4933GN-EP, 4940, and 4973 (manufactured by Dainichiseika Color & Chemicals Mfg. Co., Ltd.); KET Yellow 401, 402, 403, 404, 405, 406, 416, 424, KET Orange 501, KET Red 301, 302, 303, 304, 305, 306, 307, 308, 309, 310, 336, 337, 338, 346, KET Blue 101, 102, 103, 104, 105, 106, 111, 118, 124, and KET Green 201 (manufactured by Dainippon Ink and Chemicals, Inc.); Colortex Yellow 301, 314, 315, 316, P-624, 314, U10GN, U3GN, UNN, UA-414, U263, Finecol Yellow T-13, T-05, Pigment Yellow 1705, Colortex Orange 202, Colortex Red 101, 103, 115, 116, D3B, P-625, 102, H-1024, 105C, UFN, UCN, UBN, U3BN, URN, UGN, UG276, U456, U457, 105C, USN, Colortex Maroon 601, Colortex Brown B610N, Colortex Violet 600, Pigment Red 122, Colortex Blue 516, 517, 518, 519, A818, P-908, 510, Colortex Green 402, 403, Colortex Black 702, U905 (manufactured by Sanyo Color Works, Ltd.); Lionol Yellow 1405G, Lionol Blue FG7330, FG7350, FG7400G, FG7405G, ES, ESP-S (manufactured by Toyo Ink Co., Ltd.); Toner Magenta E02, Permanent Rubin F6B, Toner Yellow HG, Permanent Yellow GG-02, Hostaperm Blue B2G (manufactured by Hoechst AG); Novoperm P-HG, Hostaperm Pink E, and Hostaperm Blue B2G (manufactured by Clariant); carbon black #2600, #2400, #2350, #2200, #1000, #990, #980, #970, #960, #950, #850, MCF88, #750, #650, MA600, MA7, MA8, MA11, MA100, MA100R, MA77, #52, #50, #47, #45, #45L, #40, #33, #32, #30, #25, #20, #10, #5, #44, and CF9 (manufactured by Mitsubishi Chemical Corporation).

(Self-dispersible Pigment)

The pigment may be a self-dispersible pigment. The self-dispersible pigment is obtained by modifying the surface of pigment particles with a group having a hydrophilic group. The self-dispersible pigment includes pigment particles and a hydrophilic group bonded to the surface of the pigment particles.

Examples of the hydrophilic group include a carboxy group, a sulfonic acid group, and a phosphorus-containing group. Examples of the phosphorus-containing group include a phosphoric acid group, a phosphonic acid group, a phosphinic acid group, a phosphite group, and a phosphate group.

Examples of commercially available products of the self-dispersible pigment include CAB-O-JET (R) 200K, 250C, 260M, and 270 V (sulfonic acid group-containing self-dispersible pigments) manufactured by Cabot Corporation. Other examples of commercially available products of the self-dispersible pigment include CAB-O-JET (R) 300K (carboxylic acid group-containing self-dispersible pigments) and CAB-O-JET (R) 400K, 450C, 465M, 470 V, and 480 V (phosphoric acid group-containing self-dispersible pigments) manufactured by Cabot Corporation.

The content of the pigment is not particularly limited but is preferably within a range of 1.5 to 15% by mass relative to the pigment ink. As a result, the viscosity of the pigment ink can be easily adjusted within the above range, and a high-density image can be formed. When the content of the pigment is 1.5% by mass or more, a high-density image is easily formed. When the content of the pigment is 15% by mass or less, the viscosity of the ink does not become excessively high, and thus the ejection stability is less likely to be impaired. For the same reason, the content of the pigment is more preferably within a range of 5 to 15% by mass relative to the pigment ink.

(Water-dispersible Resin)

The pigment ink may further contain a water-dispersible resin. The water-dispersible resin has a function of fixing the pigment or the like to the textile. The water-dispersible resin may be contained in the ink as resin particles (second resin particles).

Examples of the water-dispersible resin include a urethane-based resin, a butadiene-based resin, an acrylic-based resin, polystyrene, and an ester-based resin. Examples of the butadiene-based resin include a styrenebutadiene copolymer and an acrylonitrile-butadiene copolymer. Examples of the acrylic-based resin include an acrylic acid ester copolymer, a styrene-acrylic copolymer, a silicone-acrylic copolymer, and an acrylic-modified fluorine resin. Among them, a urethane-based resin and an acryl-based resin such as an acrylic acid ester copolymer and a styrene-acryl copolymer are preferable. It is presumed that these are bonded to the block copolymer by an intermolecular hydrogen bond, and thus the adhesiveness of the pigment to the textile is more easily enhanced, and the wet friction fastness is more easily

enhanced.

Examples of the styrene-acrylic copolymer include a styrene-(meth)acrylic acid copolymer and a styrene-(meth) acrylic acid-(meth)acrylic acid ester copolymer. Examples of the (meth)acrylic acid ester include benzyl (meth)acrylate, cyclohexyl (meth)acrylate, methyl (meth)acrylate, ethyl (meth)acrylate, propyl (meth)acrylate, butyl (meth)acrylate, hexyl (meth)acrylate, octyl (meth)acrylate, lauryl (meth)acrylate, 2-ethylhexyl (meth)acrylate, 2-ethylhexylcarbitol (meth)acrylate, phenol EO-modified (meth)acrylate, isobornyl (meth)acrylate, dicyclopentenyl (meth)acrylate, dicyclopentanyl (meth)acrylate, and dicyclopentenyloxyethyl (meth)acrylate.

The urethane resin is a polymer obtained by reacting a polyol with a polyisocyanate. Examples of the polyol include polypropylene glycol, polyethylene glycol, polytetramethylene glycol, poly(ethylene adipate), poly(diethylene adipate), poly(propylene adipate), poly(tetramethylene adipate), poly(hexamethylene adipate), poly-ε-caprolactone, poly(hexamethylene carbonate), and silicone polyols. Examples of the isocyanate include tolylene diisocyanate, 4,4-diphenylmethane diisocyanate, xylylene diisocyanate, naphthalene diisocyanate, and hexamethylene diisocyanate. Note that other examples of the isocyanate include hydrogenated tolylene diisocyanate, hydrogenated 4,4-diphenylmethane diisocyanate, isophorone diisocyanate, and tetramethylxylylene diisocyanate.

The average particle size of the water-dispersible resin is not particularly limited, but is preferably 300 nm or less, and more preferably 130 nm or less, from the viewpoint of making nozzle clogging of an inkjet head less likely to occur. The average particle size of the water-dispersible resin can be measured by laser diffraction scattering particle size distribution measurement.

The content of the water-dispersible resin is preferably 1 to 15% by mass relative to the pigment ink. When the content of the water-dispersible resin is 1% by mass or more, the viscosity of the pigment ink is likely to be moderately increased, and thus not only the ejection stability can be further increased, but also the adhesiveness to the textile and abrasion resistance of the obtained image are likely to be increased. When the content of the water-dispersible resin is 15% by mass or less, the viscosity of the pigment ink does not become excessively high, and thus the nozzle clogging or the like is unlikely to occur. For the same reason, the content of the water-dispersible resin is more preferably 2 to 10% by mass relative to the pigment ink.

(Silicone Acrylic Resin)

The pigment ink may further contain a silicone acrylic resin. As the silicone acrylic resin, a silicone acrylic resin formed in the same manner as the silicone acrylic resin contained in the second treatment liquid described above can be suitably used. This has an effect of facilitating wetting and spreading with respect to the first treatment liquid.

(Anionic Pigment Dispersant)

The pigment ink contains an anionic pigment dispersant. The anionic pigment dispersant attaches to the surface of the pigment and facilitates dispersion of the pigment in water. A dispersion in which the pigment to which the anionic pigment dispersant is attached is dispersed in a dispersion medium (for example, water) is referred to as an anionic pigment dispersion. The anionic pigment dispersion is also simply referred to as a pigment dispersion. The anionic pigment dispersion includes "the pigment to which the anionic pigment dispersant is attached" and the "dispersion medium in which "the pigment to which the anionic pigment dispersant is attached" is dispersed". The anionic pigment dispersion may contain other ingredients.

The anionic pigment dispersant may be a random copolymer, a block copolymer, or a graft copolymer, and one type may be used alone, or two or more types may be used in combination.

The anionic pigment dispersant is not particularly limited, and examples thereof include an acrylic-based resin, a urethane-based resin, a polyester resin, a polyamide resin, and a polyimide resin. Among them, an acrylic-based resin and a urethane-based resin are preferable. The use of such an anionic pigment dispersant tends to further improve the abrasion resistance.

The acrylic resin is a resin in which a monomer containing at least acrylate or acrylic acid is polymerized, and an acrylic resin in which at least one of acrylate and acrylic acid is polymerized with another monomer is preferable. The other monomer includes a styrene acrylic resin using styrene. Note that as the acrylic resin, a commercially available product may be used, or an acrylic resin produced by a known method may be used.

The urethane-based resin is a general term for a resin having a urethane bond. As the urethane resin, in addition to a polyurethane bond, a polyol-type urethane resin containing a hydroxy group in the main chain, a polyester-type urethane resin containing an ester bond in the main chain, or a polycarbonate-type urethane resin containing a carbonate bond in the main chain may be used. Note that as the urethane-based resin, a commercially available product may be used, or a product produced by a known method may be used.

(Block Copolymer)

The block copolymer as the anionic pigment dispersant is preferably an ABA-type block copolymer composed of two hydrophilic blocks A disposed at both ends of the molecule and a hydrophobic block B disposed between the two hydrophilic blocks A. The hydrophilic block A interacts or reacts with the cationic flocculant. Here, the interaction includes electrical binding, binding by hydrogen bond, and the like.

Conventionally, for example, a random copolymer or an AB-type block copolymer is used as a pigment dispersant contained in a pigment ink. For example, the random copolymer is a copolymer randomly including a moiety that interacts or reacts with a flocculant. For example, the AB-type block copolymer is a copolymer having a block (usually, hydrophilic block A) containing many moieties that interact or react with a flocculant at only one end of the molecule.

Since the random copolymer does not have a block containing many moieties that interact or react with a flocculant, the random copolymer is less likely to interact or react with the flocculant. The AB-type block copolymer has a block containing many moieties that interact or react with a flocculant. However, since the block is present at only one end of the molecular, the number of bonding points that can be bonded to a textile may be reduced. Therefore, it is difficult to obtain adhesiveness of the copolymer to the textile, and the wet friction fastness and the dry friction fastness may be lowered. In addition, since the copolymer can be continuously bonded (film-like) to the textile at one bonding point, the textile also tends to become hard.

On the other hand, the block copolymer of the ABA-type or the like contains blocks at both ends of the molecule that contain many moieties that interact or react with a flocculant. Thus, since the blocks are present in at least two locations, at both ends of the molecule, there are many binding points capable of binding to the textile, and the binding to the textile is likely to be strong. Thus, the adhesiveness to the textile is improved and the wet friction fastness is likely to be enhanced. In addition, since the copolymer can be intermittently bonded to the textile at a plurality of bonding points, the textile is less likely to become hard than when the copolymer is continuously bonded to the textile at one bonding point. Note that the block containing many moieties that interact or react with the flocculant is a hydrophilic block.

That is, the block copolymer preferably contains two hydrophilic blocks A disposed at both ends of the molecule and a hydrophobic block B disposed between the two hydrophilic blocks A.

The "hydrophilic block A" is a block that enhances affinity with the water-based solvent contained in the pigment ink and contains moieties that interact or react with the flocculant attached to the textile. The "hydrophilic block A" refers to a block having a greater affinity for water among the blocks constituting the copolymer. The number of hydrophilic blocks is preferably two.

Each of the hydrophilic blocks A includes a structural unit derived from a monomer having a hydrophilic functional group (hereinafter, referred to as a "hydrophilic monomer"). Examples of the hydrophilic functional group include a hydroxyl group, a carboxyl group, and a sulfonic acid group.

Examples of the hydrophilic monomer constituting the hydrophilic block A include vinyl-based monomers containing a hydrophilic functional group. Examples of such vinyl-based monomers include: unsaturated polyvalent carboxylic acids such as (meth)acrylic acid and maleic acid; and monomers containing a carboxy group or an acid anhydride group, such as maleic anhydride. Other examples include monomers containing a sulfonic acid group, such as styrenesulfonic acid and 4-(methacryloyloxy) butylsulfonic acid. Still other examples include ethylene oxide-modified (meth)acrylic acid ester monomers such as ethylene oxide-modified (meth)acrylic acid alkyl esters. Among them, the hydrophilic monomer is preferably (meth)acrylic acid from the viewpoint of imparting moderate water solubility to the hydrophilic block A.

It is sufficient that the content of a structural unit derived from the hydrophilic monomer in the hydrophilic block A is greater than the content of a structural unit derived from a hydrophilic monomer in the hydrophobic block B. To be specific, the content of a structural unit derived from the hydrophilic monomer in the hydrophilic block A is preferably 5% by mass or more relative to 100% by mass of the hydrophilic block A. When the content of a structural unit derived from the hydrophilic monomer is 5% by mass or more, not only dispersibility in an aqueous solvent is more likely to be increased, but also the interaction or reaction with the flocculant is more likely to occur, thus the adhesiveness to the textile is more likely to be increased. From the same viewpoint, the content is more preferably 10 to 40% by mass.

Each of the hydrophilic blocks A may further include a structural unit derived from a monomer other than the hydrophilic monomer. Examples of the other monomer include alkyl (meth)acrylates, such as methyl (meth)acrylate and tert-butyl (meth)acrylate. Among them, alkyl esters having 2 or more carbon atoms, such as butyl (meth)acrylate, are preferable. This is because the glass transition temperature (Tg) of the block copolymer is low and the textile does not tend to become hard. However, the other monomer does not include a hydrophobic monomer, which will be described later.

The "hydrophobic block B" is a moiety attached to the pigment and refers to a block having less affinity with the aqueous solvent contained in the ink among the blocks constituting the copolymer. The number of hydrophobic blocks B is preferably one.

The hydrophobic block B includes a structural unit derived from a monomer having a hydrophobic functional group (hereinafter, referred to as a "hydrophobic monomer"). Examples of the monomer having a hydrophobic functional

group include vinyl-based monomers containing an aromatic ring group or an alicyclic hydrocarbon group.

Examples of the vinyl-based monomer containing an aromatic ring group include (meth)acrylates having an aromatic ring group, such as benzyl (meth)acrylate, phenyl (meth)acrylate, and phenoxyethyl (meth)acrylate. Other examples include aromatic vinyl-based monomers such as styrene, α-methylstyrene, 4-methylstyrene, 2-methylstyrene, 3-methylstyrene, 4-methoxystyrene, 2-hydroxymethylstyrene, and 1-vinylnaphthalene. Although not particularly limited, among these vinyl-based monomers containing an aromatic ring group, for example, a vinyl-based monomer containing an aromatic ring group having 6 to 15 carbon atoms is preferable.

Examples of the vinyl-based monomer containing an alicyclic alkyl group include (meth)acrylates having an alicyclic alkyl group. Examples of such (meth)acrylates include cyclohexyl (meth)acrylate, methylcyclohexyl (meth) acrylate, and cyclododecyl (meth)acrylate. Other examples include bornyl (meth)acrylate, isobornyl (meth)acrylate, dicyclopentanyl (meth)acrylate, dicyclopentenyl (meth)acrylate, and dicyclopentenyloxyethyl (meth)acrylate. Although not particularly limited, among these vinyl-based monomers containing an alicyclic alkyl group, a vinyl-based monomer containing an alicyclic alkyl group having 6 to 15 carbon atoms is preferable.

Among them, from the viewpoint of improving adsorption to the pigment, the hydrophobic monomer is preferably a vinyl-based monomer containing an aromatic ring group having 6 to 15 carbon atoms, such as styrene.

The content of a structural unit derived from the hydrophobic monomer in the hydrophobic block B is preferably 80% by mass or more relative to the hydrophobic block B. When the content is 80% by mass or more, the absorption to the pigment is more likely to be increased. From the same viewpoint, the content is more preferably more than 90% by mass, and even more preferably 95% by mass or more.

The hydrophobic block B may further include a structural unit derived from a monomer other than the hydrophobic monomer. Examples of the monomer other than the hydrophobic monomer include the other monomers and the hydrophilic monomers described above. However, when the hydrophobic block B contains a structural unit derived from the hydrophilic monomer, the content of a structural unit derived from the hydrophilic monomer in the hydrophobic block B is less than that in the hydrophilic block A. Specifically, the content of a structural unit derived from the hydrophilic monomer is preferably 20% by mass or less, more preferably less than 10% by mass, and still more preferably 5% by mass or less, relative to the hydrophobic block B. That is, among the two blocks, the hydrophilic block A and the hydrophobic block B, the content of a structural unit derived from the hydrophilic monomer (the number of moles of the hydrophilic functional group) is the smallest in the hydrophobic block B.

The content of the hydrophobic block B in the ABA-type block copolymer is preferably 20% by mass or more and 80% by mass or less, more preferably 20% by mass or more and 50% by mass or less relative to the entire block copolymer. When the content is 20% by mass or more, since the content of the hydrophilic block A is small (or the molecular weight is small), crosslinking flocculation is more easily suppressed. On the other hand, when the content is 80% by mass or less, since the content of the hydrophilic block A is large (or the molecular weight is large), the affinity for an aqueous solvent is more easily enhanced.

When the hydrophilic block is represented by A and the hydrophobic block is represented by B, examples of the structure of the block copolymer include ABA-type and ABABA-type. In particular, the block copolymer is preferably an ABA-type block copolymer composed of two hydrophilic blocks A disposed at both ends of the molecule and a hydrophobic block B disposed between the two hydrophilic blocks A.

The types and composition ratios of the monomers of the plurality of blocks A included in the block copolymer may be the same or different from each other. Furthermore, when the block copolymer includes a plurality of blocks B, the types and compositional ratios of the monomers of the plurality of blocks B may be the same or different from each other. In particular, the two hydrophilic blocks A preferably have the same monomer composition.

The weight average molecular weight of the block copolymer is preferably 5000 to 70000, and more preferably 7000 to 30000. The larger the above weight average molecular weight, the easier it is to improve the dispersibility of the pigment in the aqueous solvent. The smaller the weight average molecular weight, the easier it is to suppress crosslinking flocculation between the pigments to which the anionic pigment dispersant is attached (which may also be referred to as between the pigments). The weight average molecular weight of the block copolymer can be measured in terms of polystyrene by gel permeation chromatography.

The molecular weight distribution (PDI) ((weight average molecular weight (Mw) of block copolymer)/(number average molecular weight (Mn) of block copolymer)) is preferably 2.0 or less, and more preferably 1.8 or less. A lower PDI means that the molecular weight distribution is narrower and more uniform, resulting in better dispersibility.

The acid value of the block copolymer is, for example, preferably 40 to 400 mg KOH/g, more preferably 40 to 300 mg KOH/g, and further preferably 40 to 190 mg KOH/g. When the acid value is 40 mg KOH/g or more, the hydrophilicity of the pigment dispersant can be increased to further increase the dispersibility of the pigment. When the acid value is 400 mg KOH/g or less, the hydrophilicity of the pigment dispersant can be further prevented from being excessively increased, and the water resistance of the resulting image-formed product can be further increased. The acid value can be measured according to the measurement method of JIS K0070:1992.

The content of the block copolymer is preferably 10 to 50% by mass, more preferably 20 to 40% by mass relative

to the pigment. When the content is 10% by mass or more, the dispersibility of the pigment in the pigment dispersion can be further enhanced. In addition, when the content of the pigment dispersant is 50% by mass or less, it is possible to further suppress an increase in the viscosity of the pigment dispersion due to excessive inclusion of the pigment dispersant.

The method for synthesizing the block copolymer is not particularly limited, but the block copolymer can be obtained by, for example, sequentially polymerizing vinyl monomers constituting the blocks by a living radical polymerization method.

The pigment ink contains anionic resin particles having a film elongation of 600 to 1600%.

(Anionic Resin Particles with Film Elongation of 600 to 1600%)

The anionic resin particles having a film elongation of 600 to 1600% are present in a state of being dispersed in the aqueous medium. Hereinafter, the anionic resin particles having a film elongation of 600 to 1600% may be simply referred to as "anionic resin particles".

The type of resin of the anionic resin particles is not particularly limited as long as the anionic resin particles have a film elongation of 600 to 1600%, and examples thereof include a urethane-based resin, an acrylic resin, and an ester-based resin. The resin constituting the anionic resin particles preferably contains a urethane resin or an acrylic resin and is more preferably a urethane resin. By containing a urethane resin or an acrylic resin, there is an advantage in that an image having excellent image density and wet friction fastness can be formed on the textile.

The film elongation of the anionic resin particles is measured as follows. First, the resin is applied onto a polytetrafluoroethylene sheet so that the film thickness after drying becomes 500 μm, dried at room temperature and pressure, that is, at 20°C and 65% RH for 15 hours, further dried at 80°C for 6 hours and at 120°C for 20 minutes, and then peeled off from the sheet to prepare a resin film. Then, the film elongation of the obtained resin film is measured using a tensile tester under the conditions of a measurement temperature of 20°C and a measurement speed of 200 mm/min. In the measurement of the film elongation, the resin film is elongated, the elongated length until the resin film breaks is measured, and the ratio is expressed as the film elongation in percent. Note that as the tensile tester, for example, the trade name "TENSILON Universal Testing Machine RTC-1225A" manufactured by Orientec Corporation or a similar device can be used.

The anionic resin particles preferably have a film elongation of 600 to 1600%. When the film elongation of the anionic resin particles is less than 600%, there is a problem that the ink film does not easily follow expansion and contraction of the textile, causing the ink film to come off, and deteriorating the wet friction fastness. When the film elongation of the anionic resin particles is more than 1600%, there is a problem with the fastness of the coating film itself.

The content of the anionic resin particles having a film elongation of 600 to 1600% is preferably 5.0 to 15.0% by mass, particularly preferably 7.5 to 12.5% by mass, relative to the entire pigment ink. When the content is less than 5.0% by mass, there is a problem that the wet friction fastness is deteriorated. When the content is more than 15.0% by mass, there is a problem with the ejection stability.

The pigment ink contains a nonionic surfactant.

Examples of the nonionic surfactant contained in the pigment ink include an acetylene-based surfactant, an ether-based surfactant, a silicone-based surfactant, and a fluorine-based surfactant. Among them, an acetylene-based surfactant is preferable. When the nonionic surfactant is an acetylene-based surfactant, there is an advantage in that an image having excellent image density and wet friction fastness can be formed on the textile. It is thought that the density is increased by the fact that even after ejection, the textile is filled by wetting and spreading in the XY directions due to good re-absorption to the particles. It is also thought that the wet friction is increased by an increase in the contact area between the textile and the coating film.

The content of the nonionic surfactant is preferably 0.05 to 1.0% by mass, more preferably 0.08% to 0.75% by mass, and particularly preferably 0.1 to 0.5% by mass relative to the total pigment ink. When the content is less than 0.05% by mass, the amount of the ink attached to the nozzle surface increases, causing a problem with the ejection stability. When the content is more than 1.0% by mass, the viscosity of the ink increases, and there is a problem with the ejection stability.

(Water-soluble Organic Solvent)

The pigment ink, the first treatment liquid, and the second treatment liquid each preferably further contain a water-soluble organic solvent. As a result, the ejection stability by inkjet can be further enhanced.

The water-soluble organic solvents are not particularly limited as long as they are compatible with water. Examples thereof include polyhydric alcohols (e.g., dihydric alcohols such as ethylene glycol, diethylene glycol, triethylene glycol, polyethylene glycol, propylene glycol, dipropylene glycol, tripropylene glycol, and polypropylene glycol, and trihydric or higher hydric alcohols such as glycerin, trimethylolpropane, and hexanetriol); polyhydric alcohol ethers (e.g., ethylene glycol monomethyl ether, ethylene glycol monoethyl ether, ethylene glycol monobutyl ether, ethylene glycol monophenyl ether, diethylene glycol monomethyl ether, diethylene glycol monoethyl ether, diethylene glycol monobutyl

ether, diethylene glycol dimethyl ether, propylene glycol monomethyl ether, and propylene glycol monoethyl ether); monohydric alcohols (e.g., methanol, ethanol, propanol, pentanol, hexanol, cyclohexanol, and benzyl alcohols); amines (e.g., ethanol amine, N-ethyldiethanolamine, morpholine, N-ethylmorpholine, ethylene diamine, diethylene diamine, and triethylene tetramine); amides (e.g., formaldehyde amide, N,N-dimethylformamide, N,N-dimethylacetamide); heterocycles (e.g., 2-pyrrolidone, N-methyl-2-pyrrolidone, N-cyclohexyl-2-pyrrolidone, 2-oxazolidone, and 1,3-dimethyl-2-imidazolidine); sulfoxides (e.g., dimethylsulfoxide); and sulfones (e.g., sulfolane).

In addition, from the viewpoint of further enhancing the ejection stability by inkjet, the water-soluble organic solvent preferably includes a water-soluble organic solvent having a boiling point of 180°C or higher, preferably 190°C or higher, and more preferably 200°C or higher. Examples of the water-soluble organic solvent having a boiling point of 180°C or higher include dihydric alcohols and trihydric or higher hydric alcohols. Examples of the dihydric alcohols include ethylene glycol (boiling point: 197°C), 1,3-butanediol (boiling point: 208°C), 1,6-hexanediol (boiling point: 223°C), and polypropylene glycol. Examples of the trihydric or higher hydric alcohols include glycerin (boiling point: 290°C) and trimethylolpropane (boiling point: 295°C).

The content of the water-soluble organic solvent contained in the first treatment liquid is, for example, preferably 10% by mass or more and 65% by mass or less, more preferably 20% by mass or more and 45% by mass or less relative to the first treatment liquid. The content of the water-soluble organic solvent contained in the second treatment liquid is, for example, preferably 10% by mass or more and 65% by mass or less and more preferably 20% by mass or more and 45% by mass or less relative to the second treatment liquid. The content of the water-soluble organic solvent in the pigment ink is, for example, preferably 10% by mass or more and 65% by mass or less, more preferably 20% by mass or more and 45% by mass or less relative to the pigment ink.

The content of the water contained in the first treatment liquid is preferably 30% by mass or more and 85% by mass or less and more preferably 50% by mass or more and 75% by mass or less relative to the first treatment liquid. The content of the water contained in the second treatment liquid is preferably 30% by mass or more and 85% by mass or less and more preferably 50% by mass or more and 75% by mass or less relative to the second treatment liquid. The content of water contained in the pigment ink is preferably 30% by mass or more and 85% by mass or less and more preferably 50% by mass or more and 75% by mass or less relative to the pigment ink.

(Other Components)

The pigment ink, the first treatment liquid, and the second treatment liquid may further contain other components than those described above, if necessary. Examples of the other components include a surfactant and a preservative. The pigment ink may contain a surfactant in addition to the nonionic surfactant.

The surfactant can decrease the surface tension of the pigment ink, the first treatment liquid, and the second treatment liquid to increase the wettability thereof to the textile. The type of surfactant is not particularly limited, and may be, for example, an acetylene glycol-based surfactant, a silicone-based surfactant, or a fluorine-based surfactant.

Examples of the preservative or an antifungal agent include aromatic halogen compounds (e.g., Preventol CMK), methylene dithiocyanate, halogen-containing nitrogen-sulfur compounds, and 1,2-benzisothiazolin-3-one (e.g., PROXEL GXL).

The pigment ink may further contain a crosslinking agent for crosslinking the resin constituting the resin particles. The crosslinking agent is preferably a compound having, in the molecule, at least two functional groups that react with a crosslinkable group (a hydroxyl group, a carboxyl group, and a ketone group) of the resin particles. Examples of the crosslinking group that reacts with a hydroxyl group include an isocyanate group and a blocked isocyanate group. Furthermore, examples of the crosslinking group that reacts with a carboxy group include an oxazolyl group, an aziridine group, and a carbodiimide group. Furthermore, examples of the crosslinking group that reacts with a ketone group include a hydrazide group.

Specifically, examples of the crosslinking agent that reacts with a hydroxyl group include Fixer N (a blocked isocyanate-based crosslinking agent, manufactured by Matsui Shikiso Chemical Co., Ltd.). Examples of the crosslinking agent that reacts with a carboxy group include Fixer F (an aziridine-based crosslinking agent, manufactured by Matsui Shikiso Chemical Co., Ltd.). Examples of the crosslinking agent that reacts with a ketone group include adipic acid dihydrazide (ADH, hydrazine-based crosslinking agent).

For example, as the crosslinking agent contained in the pigment ink, adipic acid dihydrazide is most preferable, and a combination with diacetone acrylamide (DAAM), which is a crosslinkable monomer that reacts with adipic acid dihydrazide, is most preferable. When the crosslinking agent contained in the pigment ink is prepared in this manner, the pigment ink can be stored at room temperature for a long period of time and can be crosslinked at room temperature. The content of the crosslinking agent in the pigment ink is not particularly limited.

< Preparation of Pigment Ink, First Treatment Liquid, and Second Treatment Liquid >

The pigment ink, the first treatment liquid, and the second treatment liquid can be prepared by any method so as to contain each of the components described so far. For example, the pigment ink can be produced through a step of mixing the above-described pigment, water, a suitable dispersant, and the like.

[Ink Set for Inkjet Textile Printing]

Next, one embodiment of the ink set for inkjet textile printing according to the present invention will be described. The ink set for inkjet textile printing according to the present embodiment is an ink set for inkjet textile printing that includes a pigment ink, a first treatment liquid, and a second treatment liquid. The ink set is characterized in that the pigment ink, the first treatment liquid, and the second treatment liquid are the pigment ink, the first treatment liquid, and the second treatment liquid used in the inkjet textile printing method according to the present embodiment described above. According to such an ink set for inkjet textile printing, there is an advantage in that the ink set can be used in the inkjet textile printing method according to the present embodiment described above, and an image excellent in image density and wet friction fastness can be formed on a textile.

[Inkjet Textile Printing Apparatus]

Hereinafter, one embodiment of the inkjet textile printing apparatus according to the present invention will be described with reference to the drawings, but the present invention is not limited thereto. FIG. 1 is a schematic diagram illustrating an embodiment of an inkjet textile printing apparatus 1. FIG. 2 is a plan view of an inkjet unit 11, a first treatment liquid ejection head 13, and a second treatment liquid ejection head 14, which are mounted on a carriage 10. A XYZ three dimensional coordinate system illustrated in FIG. 1 is a coordinate system in which an XY plane is a horizontal plane and a Z direction is a vertical direction, and is a coordinate system common to a coordinate system illustrated in FIG. 2. A X direction is the main scanning direction, and a Y direction is the direction in which the textile is conveyed.

The inkjet textile printing apparatus 1 includes the inkjet unit 11, the first treatment liquid ejection head 13, and the second treatment liquid ejection head 14. The inkjet unit 11 ejects a pigment ink onto a textile 3 while the inkjet unit 11 is moved in the main scanning direction X. The first treatment liquid ejection head 13 is moved with the inkjet unit 11 in the main scanning direction X and ejects a first treatment liquid onto the textile 3. The second treatment liquid ejection head 14 is moved with the inkjet unit 11 in the main scanning direction X and ejects a second treatment liquid onto the textile 3. The first treatment liquid ejection head 13 and the second treatment liquid ejection head 14 are disposed on both sides of the inkjet unit 11 in the main scanning direction X. Furthermore, the inkjet unit 11 includes a yellow ink head 11y, a magenta ink head 11m, a cyan ink head 11c, and a black ink head 11k. Furthermore, the inkjet textile printing apparatus 1 includes an inkjet head 15 that includes the inkjet unit 11, the first treatment liquid ejection head 13, and the second treatment liquid ejection head 14. In the inkjet textile printing apparatus 1 according to the present embodiment, the inkjet unit 11, the first treatment liquid ejection head 13, and the second treatment liquid ejection head 14 constitute the inkjet head 15. Note that the inkjet unit 11 may have a configuration in which an additional inkjet head of the same color or of a different color is disposed, or a configuration in which several rows of the above-described inkjet heads 15 are disposed.

In addition, the inkjet textile printing apparatus 1 according to the present embodiment can perform inkjet textile printing that satisfies each requirement of the inkjet textile printing method according to the present embodiment. Specifically, the pigment ink, the first treatment liquid, and the second treatment liquid are ejected onto the textile 3 from the inkjet head 15 in the order of the first treatment liquid, the pigment ink, and the second treatment liquid. Then, the first treatment liquid, the pigment ink, and the second treatment liquid are attached to the same place without drying. The first treatment liquid contains a water-soluble cationic flocculant, and the second treatment liquid contains a silicone acrylic resin. The pigment ink contains a pigment, an anionic pigment dispersant, "anionic resin particles having a film elongation of 600 to 1600%", and a nonionic surfactant. Further, the mass ratio of the nonionic surfactant to the "total amount of the pigment, the anionic pigment dispersant, and the anionic resin particles" is 0.022 or more and 0.096 or less. Here, the first treatment liquid retains at least one of the pigment ink and the second treatment liquid on the surface of the textile. The first treatment liquid is preferably one that retains at least pigment ink on surface of the textile.

The inkjet textile printing apparatus 1 according to the present embodiment is a textile printing apparatus that forms an image by ejecting the ink onto the textile 3 being conveyed along a predetermined conveyance direction. As shown in FIG. 1, the inkjet textile printing apparatus 1 includes a conveyance section 2 that conveys the textile 3, an image forming section 4, and a controller 30. Furthermore, a drying section or the like may be separately disposed.

(Conveyance Section)

The conveyance section 2 conveys the textile 3 along the predetermined conveyance direction (the Y direction in

FIG. 1). The conveying section 2 includes a pair of conveyance rollers 2a and 2b and a platen 2c. The pair of conveyance rollers 2a and 2b are driven by a conveyance motor (not shown) to rotate about a rotation axis parallel to the X direction in FIG. 1. Thus, the textile 3 stretched between the pair of conveyance rollers 2a_and 2b is conveyed in the conveyance direction (Y direction). The platen 2c is a plate-shaped member disposed between the pair of conveyance rollers 2a and 2b so that the upper surface of the platen 2c is substantially horizontal. The platen 2c supports the textile 3 on its upper surface. Alternatively, the platen 2c may be provided with vent holes, and the textile 3 may be sucked onto the upper surface of the platen 2c by sucking air from the side opposite to the textile 3. In this case, the textile 3 is conveyed in the predetermined conveyance direction while the textile is sucked onto the upper surface of the platen 2c. Note that the configuration of the conveyance section 2 is not limited to the above. For example, it may be possible to adopt a configuration in which an endless conveyance belt is stretched between the pair of conveyance rollers 2a and 2b and the textile 3 is conveyed in the conveyance direction by the conveyance belt circulating in accordance with the rotation of the conveyance rollers 2a and 2b.

In FIG. 1, the conveyance section 2 conveys the textile 3 by the conveyance rollers 2a and 2b. However, the conveyance section 2 may convey the textile 3 attached to a conveyance belt.

When the conveyance section 2 conveys the textile 3 attached to a conveyance belt, the following cleaning step is accompanied. Here, FIG. 4 is a diagram illustrating a schematic configuration of an inkjet textile printing apparatus in which a textile is conveyed while being attached to a conveyance belt. In the case of a configuration in which the textile is conveyed while being attached to the conveyance belt, as illustrated in FIG. 4, a conveyance belt cleaning section 104 is disposed below a belt conveyance section 102. The conveyance belt cleaning section 104 is provided with a plurality of cleaning means and the like in sequence along the movement direction of a conveyance belt 223. Note that in the belt conveyance section 102, a drive roller 221 is rotated at a predetermined speed in the counterclockwise direction (see the arrow) in FIG. 4 by rotational drive of a sub-scanning motor, thereby rotationally moving the conveyance belt 223 stretched between the drive roller 221 and a driven roller 222. Thus, a textile T2 placed on the upper surface of the conveyance belt 223 is conveyed in a direction indicated by arrow A in the drawing, which is a sub-scanning direction. In FIG. 4, the reference sign 103 represents an image forming section as an inkjet coating device.

The conveyance belt cleaning section 104 includes a water spray pipe 141, a brush roller 142, a cleaning blade 143, a cleaning sponge 144, and a heater 145.

The water spray pipe 141 is bridged over the entire width of the conveyance belt 223. In the water spray pipe 141, a large number of nozzles are aligned along a length direction in a portion facing the surface of the conveyance belt 223. A cleaning liquid is supplied to the water spray pipe 141 via a water spray tube 141a by driving a water spray pump. The water spray pipe 141 sprays the supplied cleaning liquid from the nozzles toward the surface of the conveyance belt 223, thereby cleaning foreign matter attached to the surface of the conveyance belt 223.

The brush roller 142 is formed in a roller shape by planting a plurality of brush bundles, each of which is formed by bundling brush bristles, around a rotating shaft spanning the entire width of the conveyance belt 223. The tips of the brush bundles are always in contact with the surface of the conveyance belt 223 downstream of the spraying position of the water spray pipe 141 in the rotation direction of the conveyance belt 223. The brush roller 142 is rotatably in contact with the surface of the conveyance belt 223 to remove foreign matter such as a flocculate remaining on the surface of the conveyance belt 223. Specifically, the brush roller 142 is rotated at a predetermined speed in the same direction as the rotation direction of the drive roller 221, based on the power of a brush drive section (not illustrated). Thus, the brush roller 142 is moved in a direction opposite to the movement direction of the conveyance belt 223 to rub the surface of the conveyance belt 223 with the tips of the brush bundles. Thus, the brush roller 142 removes the foreign matter cleaned by the spraying of the cleaning liquid by the water spray pipe 141 upstream in the movement direction of the conveyance belt 223.

A cleaning tub for storing the cleaning liquid may be disposed below the brush roller 142. In this case, a lower portion of the brush roller 142 is partially immersed in the cleaning liquid to scrape up the cleaning liquid during rotation, thereby enhancing the effect of removing foreign matter. Furthermore, the cleaning liquid in the cleaning tub may be supplied to the water spray pipe 141 via the water spray tube 141a. In this case, the cleaning liquid that has been sprayed onto the surface of the conveyance belt 223 and drips from the surface is collected in the cleaning tub to be reused.

The cleaning blade 143 is disposed downstream of the brush roller 42 in the rotation direction of the conveyance belt 223. The cleaning blade 143 is formed in a flat plate shape by, for example, an elastic material such as rubber, a PET sheet, a straight brush, or the like, and is bridged over the entire width of the conveyance belt 223. The cleaning blade 143 is configured such that its tip can come into contact with or separate from the surface of the conveyance belt 223. The cleaning blade 143 is brought in contact with the surface of the conveyance belt 223 to remove foreign matter or the cleaning liquid remaining on the surface of the conveyance belt 223 by scraping off the foreign matter or the cleaning liquid.

The cleaning sponge 144 is a water-absorbing porous body, such as a sponge, and is bridged over the entire width of the conveyance belt 223. The surface of the cleaning sponge 144 is configured to be able to come into contact with or separate from the surface of the conveyance belt 223 downstream of the cleaning blade 143 in the rotation direction of the conveyance belt 223. The cleaning sponge 144 is brought in contact with the surface of the conveyance belt 223 to

absorb and wipe off the cleaning liquid remaining on the surface of the conveyance belt 223.

The heater 145 is a belt heater and is disposed downstream of the cleaning sponge 144 and upstream of the driven roller 222 in the rotation direction of the conveyance belt 223. The heater 145 heats and evaporates the cleaning liquid remaining on the surface of the conveyance belt 223.

In FIG. 1, the conveyance section 2 intermittently conveys the textile 3 along the conveyance direction (Y direction). That is, the conveyance section 2 stops the conveyance operation of the textile 3 after conveying the textile 3 in the conveyance direction by a predetermined amount. Then, after an image having a predetermined width is formed on the textile 3 by the image forming section 4, the conveyance section 2 conveys the textile 3 again by a predetermined amount along the conveyance direction and then stops the conveyance operation of the textile 3. In this way, the conveyance section 2 repeats the operation of stopping the conveyance after conveying the textile 3 in the conveyance direction by a predetermined amount.

(Image Forming Section)

As illustrated in FIG. 1, the image forming section 4 is disposed above the textile 3 being conveyed by the conveyance section 2 and is traversed above the textile 3 in a direction (X direction) orthogonal to the conveyance direction (Y direction). The image forming section 4 forms an image on the textile 3 by ejecting the ink onto the textile 3 while the conveyance operation of the textile 3 by the conveyance section 2 is stopped. The image forming section 4 includes the inkjet unit 11 and the carriage 10 that holds the inkjet unit 11. The inkjet unit 11 is, for example, an inkjet unit that ejects inks of four colors of yellow (Y), magenta (M), cyan (C), and black (K). The carriage 10 is attached to a rail member 5 that passes over the textile 3. The carriage 10 is reciprocated along the extending direction (X direction) of the rail member 5 by driving a motor (not shown). The movement direction (X direction) of the carriage 10 is the main scanning direction in which the inkjet unit 11 is moved when an image is formed on the textile 3. That is, while the conveyance of the textile 3 is stopped, the image forming section 4 forms an image by ejecting the ink onto the textile 3 from the inkjet unit 11 while the inkjet unit 11 is moved in the main scanning direction. At this time, the inkjet unit 11 ejects the ink onto the textile 3 based on image data to be printed (textile printing). Therefore, while the inkjet unit 11 is moved in the main scanning direction, the inkjet unit 11 ejects the ink onto an image region that includes an effective image component in the image data to be printed. Then, the inkjet unit 11 does not eject the ink onto the margin region that does not include the effective image component.

The inkjet unit 11 is disposed at the center of the carriage 10 in the main scanning direction. The carriage 10 includes treatment liquid ejection heads 12a and 12b on both sides of the inkjet unit 11 in the main scanning direction. That is, in the main scanning direction, the treatment liquid ejection head 12a is disposed on one side of the inkjet unit 11, while the treatment liquid ejection head 12b is disposed on the other side. The treatment liquid ejection heads 12a and 12b are disposed next to the inkjet unit 11 in the main scanning direction of the carriage 10. The treatment liquid ejection heads 12a and 12b are moved in the main scanning direction together with the inkjet unit 11. The treatment liquid ejection heads 12a and 12b each eject a predetermined treatment liquid onto the textile 3 before or after the ink is ejected onto the textile 3 by the inkjet unit 11.

In addition, at least one end of the rail member 5 provided in the image forming section 4 is extended further outward than the conveyance path through which the textile 3 is conveyed. Therefore, the carriage 10 can be moved further outward than the conveyance path of the textile 3 in which the rail member 5 is extended. At the end, on the side where the rail member 5 is extended, a purge tub 6 and a waste liquid tank 8 are disposed. In addition, a cleaning section 20 is further disposed at a position adjacent to the purge tub 6 and the waste liquid tank 8. The purge tub 6 and the waste liquid tank 8 are for collecting the ink and treatment liquids purged and discharged respectively from the inkjet unit 11 and the treatment liquid ejection heads 12a and 12b. The cleaning section 20 is for cleaning nozzles provided on the ink ejection face of the inkjet unit 11 and the treatment liquid ejection faces of the treatment liquid ejection heads 12a and 12b. The cleaning section 20 is disposed on a cleaning section rail member 21 that is disposed along a direction (Y direction) parallel to the conveyance direction of the textile 3. The cleaning section 20 can be moved in the Y direction along the cleaning section rail member 21.

(Drying Section)

The inkjet textile printing apparatus according to the present embodiment may include a drying section (not illustrated) that dries the first treatment liquid, the pigment ink, and the second treatment liquid applied by the image forming section 4. The drying means used in the drying section is not particularly limited, and heating by warm air, a hot plate, a heat roller, or infrared drying is preferable. From the viewpoint of sufficiently removing the solvent component in a short time, heat drying is more preferable. The drying temperature is preferably within a range of 100 to 200°C.

(Controller)

The controller 30 controls the operation of each of the above-described components, for example, as follows. For example, when image formation is performed on the textile 3, the controller 30 intermittently conveys the textile 3 in the conveyance direction, and moves the carriage 10 along the main scanning direction while stopping the conveyance of the textile 3. For example, while moving the carriage 10 from the start position in the forward direction, the controller 30 drives the inkjet unit 11 to form an image of one line in the main scanning direction on the textile 3. The image width of one line formed on the textile 3 corresponds to the printing width of the inkjet unit 11 in the conveyance direction of the textile 3. Next, when the image for one line is formed, the controller 30 intermittently conveys the textile 3. The conveyance amount of the textile 3 at this time corresponds to the image width of one line formed by the inkjet unit 11. When the textile 3 is conveyed by the image width of one line, the controller 30 stops the conveyance of the textile 3 and moves the carriage 10 along the main scanning direction again. After moving the carriage 10 in the forward direction, the controller moves the carriage 10 in the backward direction, which is the opposite direction. The controller 30 does not drive the inkjet unit 11 when moving the carriage 10 in the backward direction. After returning the carriage 10 to the original start position, the controller 30 moves the carriage 10 in the forward direction again and drives the inkjet unit 11. By repeatedly performing such an intermittent operation, the controller 30 forms an image on the textile 3.
Furthermore, when cleaning the nozzles of the inkjet unit 11, the controller 30 moves the carriage 10 to a position above the purge tub 6 or a position above the cleaning section 20. When the carriage 10 is moved to a position above the purge tub 6, the controller 30 drives the inkjet unit 11 and the treatment liquid ejection heads 12a and 12b to purge and discharge the ink and the treatment liquids from the nozzles. Thus, clogging of the nozzles can be prevented in advance. Furthermore, when the carriage 10 is moved to a position above the cleaning section 20, the controller 30 drives the cleaning section 20 to move the cleaning section 20 along the Y direction. Thus, the cleaning section 20 can clean the nozzles of the inkjet unit 11 and the treatment liquid ejection heads 12a and 12b.

(Inkjet Unit and Treatment Liquid Ejection Heads)

Next, the inkjet unit 11 and the treatment liquid ejection heads 12a and 12b mounted on the carriage 10 will be described in detail.
As illustrated in FIG. 2, the inkjet unit 11 includes a yellow ink head 11y, a magenta ink head 11m, a cyan ink head 11c, and a black ink head 11k, which eject inks of four colors of Y, M, C, and K, respectively. The yellow ink head 11y, the magenta ink head 11m, the cyan ink head 11c, and the black ink head 11k may be simply referred to as "ink heads 11y, 11m, 11c, and 11k." The ink heads 11y, 11m, 11c, and 11k are disposed at predetermined intervals along the main scanning direction. In addition, each of the ink heads 11y, 11m, 11c, and 11k includes a large number of nozzles on an ejection surface facing the textile 3. The nozzles are aligned along the conveyance direction of the textile 3 orthogonal to the main scanning direction and define the printing width when an image is formed on the textile 3. For example, the ink ejected from each of the ink heads 11c, 11m, 11y, and 11k includes at least a pigment.
The treatment liquid ejection heads 12a and 12b are disposed on the same row as the plurality of ink heads 11c, 11m, 11y, and 11k in the main scanning direction. That is, the plurality of ink heads 11c, 11m, 11y, and 11k are disposed so as to be sandwiched by the treatment liquid ejection heads 12a and 12b on both sides in the main scanning direction.
The treatment liquid ejection head 12a includes the first treatment liquid ejection head 13. The first treatment liquid ejection head 13 is disposed at a position outside and adjacent to the cyan ink head 11c at a distance greater than the distance between the dispositions of the plurality of ink heads 11c, 11m, 11y, and 11k.
The treatment liquid ejection head 12b includes a second treatment liquid ejection head 14. The second treatment liquid ejection head 14 of the treatment liquid ejection head 12b is disposed at a position outside and adjacent to the black ink head 11k at a distance greater than the distance between the dispositions of the plurality of ink heads 11c, 11m, 11y, and 11k.
As described above, the inkjet textile printing apparatus 1 according to the present embodiment includes one first treatment liquid ejection head 13 and one second treatment liquid ejection head 14. The first treatment liquid ejection head 13 and the second treatment liquid ejection head 14 are disposed on both sides of the inkjet unit 11 in the main scanning direction.
The first treatment liquid ejection head 13 ejects the first treatment liquid onto the textile 3. The first treatment liquid is a liquid to be ejected onto the textile 3 before the pigment ink is ejected onto the textile 3. The first treatment liquid is used as a pre-treatment liquid. The first treatment liquid contains a water-soluble cationic flocculant that flocculates the pigment ink. The first treatment liquid containing the water-soluble cationic flocculant can make the color of the pigment ink stand out by flocculating the pigment ink ejected onto the textile 3, thereby suppressing color unevenness.
The first treatment liquid ejection head 13 mounted on the carriage 10 ejects the first treatment liquid onto the textile 3 while the inkjet unit 11 is moved in the main scanning direction, before the pigmented ink is ejected from the ink heads 11c, 11m, 11y, and 11k.

The second treatment liquid ejection head 14 ejects the second treatment liquid onto the textile 3 while the inkjet unit 11 is moved in the main scanning direction, after the pigmented ink is ejected from the ink heads 11c, 11m, 11y, and 11k.

(Textile)

Examples of the type of fibers constituting the textile include natural fibers (hydrophilic fibers) such as cotton, hemp, wool, and silk, and chemical fibers such as rayon, vinylon, nylon, acrylic, polyurethane, polyester, and acetate.

[Examples]

Hereinafter, the present invention will be specifically described with reference to Examples, but the present invention is not limited thereto. Note that in the following Examples, operations were performed at room temperature (25°C) unless otherwise specified. Furthermore, unless otherwise specified, "%," "ppm," and "part(s)" mean "% by mass," "ppm by mass," and "part(s) by mass," respectively. In the following Examples, a dispersion refers to a dispersion in which resin particles, a pigment, and the like are dispersed in a dispersion medium.

1. Preparation of First Treatment Liquid

< Preparation of First Treatment Liquid A-1 >

The following components were mixed in an amount of 100% by mass to prepare a first treatment liquid A-1.

MPT-60 (flocculant manufactured by Mitsubishi Pencil Company, Ltd.): 3 parts by mass
Glycerin: 10 parts by mass
Propylene glycol: 30 parts by mass
Proxel GXL(S) (preservative): 0.05 parts by mass
OLFINE E1010 (surfactant manufactured by Nissin Chemical Industry Co., Ltd.): 0.1 parts by mass Ion-exchanged water: 55.85 parts by mass

< Preparation of First Treatment Liquids A-2 and A-3 >

First treatment liquids A-2 and A-3 were prepared in the same manner except that the type and content of the flocculant were changed as listed in Table 1, and the amount of ion-exchanged water was adjusted so that the total amount was 100 parts by mass.
The compositions of the first treatment liquids A-1 to A-3 are listed in Table 1.

[Table 1]

TABLE I

| FIRST TREATMENT LIQUID | FLOCCULANT | PARTS BY MASS | REMARKS |
|---|---|---|---|
| A - 1 | MPT - 60 | 3 | CATIONIC RESIN |
| A - 2 | PAS-M-1L | 3 | CATIONIC RESIN |
| A - 3 | MAGNESIUM NITRATE | 3 | POLYVALENT METAL SALT |

- MPT-60: Quaternary salt of alkylamine-epichlorohydrin adduct
- PAS-M-1L: Methyldiallylamine hydrochloride polymer (Nittobo Medical Co., Ltd.)

2. Preparation of Pigment Ink

2-1. Preparation of Polymer for Dispersant

< Preparation of Block Copolymer P-1 >

Into a flask equipped with an argon gas inlet tube and stirring blade, 138.8 g of n-butyl methacrylate (hereinafter

referred to as "BMA"), 73.5 g of methyl methacrylate (hereinafter referred to as "MMA"), 59.6 g of methacrylic acid (hereinafter referred to as "MAA"), 23.3 g of ethyl-2-methyl-2-n-butyltetralinyl-propionate (hereinafter referred to as "BTEE"), 14.3 g of dibutylditerride (hereinafter referred to as "DBDT"), 2.6 g of 2,2'-azobisisobutyronitrile (hereinafter referred to as "AIBN"), 166.1 g of methyl ethyl ketone, and 166.1 g of acetonitrile were charged, and the mixture was reacted at 60°C for 18 hours to obtain a reaction solution A. Thus, a prepolymer (hydrophilic block A, weight average molecular weight (Mw): 6920) was obtained.

A mixed solution of 233 g of previously argon-substituted benzyl methacrylate (hereinafter referred to as "BzMA"), 23.3 g of MAA, 2.6 g of AIBN, 98.0 g of methyl ethyl ketone, and 98.0 g of acetonitrile was added to the reaction solution A, followed by reaction at 60°C for 9 hours to obtain a reaction solution AB. Thus, a prepolymer (weight average molecular weight (Mw): 9910) containing the hydrophilic block A and the hydrophobic block B was obtained.

A mixed solution of 138.8 g of previously argon-substituted BMA, 73.5 g of MMA, 59.6 g of MAA, 1.3 g of AIBN, 61.1 g of methyl ethyl ketone, and 388.5 g of acetonitrile was added to the reaction solution AB, followed by reaction at 60°C for 23 hours to obtain a reaction solution ABA. Thus, a block copolymer P-1 (weight average molecular weight (Mw): 13800, acid value: 100) containing the hydrophilic block A, the hydrophobic block B, and the hydrophilic block A was obtained.

After the reaction was completed, 3.6 kg of methyl ethyl ketone was added to the reaction solution ABA, and the mixture was poured into 21 L of heptane with stirring. The precipitated polymer was suction-filtered and dried to obtain a block copolymer P-1.

< Preparation of Random Copolymer P-2 >

A random polymer P-2 (weight average molecular weight (Mw): 15500, acid value: 96) having a monomer composition of BMA/BzMA/MMA/MAA = 36/30/19/15 was obtained by known radical polymerization.

2-2. Preparation of Pigment Dispersion (Anionic Pigment Dispersion)

< Preparation of Pigment Dispersion O-1 >

To 20.0 parts by mass of a magenta pigment, the block copolymer P-1 added in an amount of 30% by mass relative to the pigment, 20 parts by mass of propylene glycol (PG), 5 parts by mass of 1,2-hexanediol (1,2-HD), and ion-exchanged water were added as a pigment dispersant and mixed to obtain a precursor of a pigment dispersion. The obtained precursor of the pigment dispersion was an aqueous pigment dispersion having a pigment concentration of 20.0%. The magenta pigment was FASTOGEN SUPER MAGENTA RY [C. I. Pigment Red 122 manufactured by Dainippon Ink and Chemicals, Inc.].

A pigment dispersion O-1 (mean particle size: 120 nm) having a pigment concentration of 20.0% was prepared by dispersing the precursor of the pigment dispersion using a horizontal medium disperser. The volume-based average particle size was measured using a particle size distribution analyzer (Zetasizer Nano 1000HS manufactured by Malvern Panalytical Ltd.). The horizontal medium disperser was LABSTAR Mini LMZ015 (manufactured by Ashizawa Finetech Ltd., zirconia bead size: 0.3 mm).

< Preparation of Pigment Dispersion O-2 >

A dispersion O-2 (mean particle size: 120 nm) having a concentration of 20.0% was prepared in the same manner as the dispersion O-1 except that the block copolymer P-1 was changed to the random copolymer P-2.

< Preparation of Pigment Dispersion O-3 >

A pigment dispersion O-3 was prepared in the same manner as the pigment dispersion O-1 except that CAB-O-JET 4637M (manufactured by Cabot Corp., pigment concentration: 23% by mass) was used as the pigment dispersion.

2-3. Preparation of Resin Dispersion

< Synthesis of Resin Dispersion Q-1 >

A separable flask equipped with a stirrer, a temperature sensor, a cooling tube, and an argon gas introduction device was prepared. Then, 2.52 g of an anionic surfactant (sodium dodecylbenzenesulfonate: SDS) and 0.58 g of sodium carbonate were dissolved in 553 g of ion-exchanged water to prepare a surfactant solution. Next, the surfactant solution prepared above was charged into the separable flask prepared above, and the internal temperature was increased to 80°C

while stirring at a stirring speed of 330 rpm under an argon gas airflow. On the other hand, 162 g of n-butyl acrylate (BA), 54 g of methyl methacrylate (MMA), 12 g of diacetone acrylamide (DAAM) and 12 g of methacrylic acid (MAA) were dissolved to prepare a monomer solution. Next, a solution was prepared by dissolving 0.16 g of a polymerization initiator (potassium persulfate: KPS) in 3.06 g of ion-exchanged water, and the solution was charged into the solution in the above separable flask, which had been heated to 80°C. To this solution, the prepared monomer solution was added dropwise over 60 minute, followed by stirring, to produce a dispersion of anionic resin particles. Further, after completion of the dropwise addition, the mixture was heated and stirred for 120 minutes. Thereafter, a solution obtained by dissolving 0.16 g of a polymerization initiator (potassium persulfate: KPS) in 3.06 g of ion-exchanged water was further added thereto, and the mixture was stirred for 60 minutes. Thereafter, the mixture was cooled to 40°C to obtain a dispersion Q-1 of anionic resin particles (resin concentration: 20% by mass). The film elongation was 700%. The "dispersion of anionic resin particles" is also referred to as a "resin dispersion".

< Resin Dispersions Q-2 to Q-7 >

The product names and film elongation of resin dispersions Q-2 to Q-7 are listed in Table 2.

[Table 2]

TABLE II

| RESIN DISPERSION | PRODUCT NAME | FILM ELONGATION (%) |
|---|---|---|
| Q - 1 | - | 700 |
| Q - 2 | SUPERFLEX 460 | 750 |
| Q - 3 | IMPRANIL DLP-R | 1550 |
| Q - 4 | IMPRANIL DLH | 650 |
| Q - 5 | TAKELAC W-6061 | 1050 |
| Q - 6 | SUPERFLEX 420 | 290 |
| Q - 7 | TAKELAC W-6010 | 380 |

- SUPERFLEX 460: manufactured by DKS Co., Ltd.
- IMPRANIL DLP-R: manufactured by Sumika Covestro Urethane Company, Ltd.
- IMPRANIL DLH: manufactured by Sumika Covestro Urethane Company, Ltd.
- TAKELAC W-6061: manufactured by Mitsui Chemicals, Inc.
- SUPERFLEX 420: manufactured by DKS Co., Ltd.
- TAKELAC W-6010: manufactured by Mitsui Chemicals, Inc.

2-4. Preparation of Pigment Ink

< Preparation of Pigment Ink B-1 >

The following components were mixed in an amount of 100% by mass to prepare a pigment ink B-1.

Anionic pigment dispersion O-1: 4.5 parts by mass
Anionic resin particles Q-2: 10 parts by mass
CHALINE E-370 (silicone acrylic resin manufactured by Nissin Chemical Industry Co., Ltd.): 0.5 parts by mass
Glycerin: 10 parts by mass
Propylene glycol: 20 parts by mass
Proxel GXL(S) (preservative): 0.1 parts by mass
OLFINE E1010 (nonionic surfactant manufactured by Nissin Chemical Industry Co., Ltd.): 0.5 parts by mass
TEGO WET 250 (nonionic surfactant manufactured by Evonik Industries AG): 0.1 parts by mass
Ion-exchanged water: 54.3 parts by mass

< Preparation of Pigment Inks B-2 to B-12 >

Pigment inks B-2 to B-12 were prepared in the same manner as B-1 except that the type of the pigment dispersion, the type and parts by mass of the anionic resin particles, and the type and parts by mass of the nonionic surfactant were changed as shown in Table 3, and the amount of ion-exchanged water was adjusted so that the total amount was 100 parts by mass.

[Table 3]

TABLE III

| PIGMENT INK | PIGMENT DISPERSION | | ANIONIC RESIN PARTICLES | | | NONIONIC SURFACTANT | | RATIO (SURFACTANT/ (PIGMENT + RESIN)) |
|---|---|---|---|---|---|---|---|---|
| | TYPE | PARTS BY MASS | TYPE | FILM ELONGATION | PARTS BY MASS | TYPE | PARTS BY MASS | |
| B - 1 | O-2 | 3.5 | - | 700 | 10 | E1010/TEGO | 1.2/0.1 | 0.096 |
| B - 2 | O-1 | 3.5 | SUPERFLEX 460 | 750 | 10 | E1010/TEGO | 0.5/0.1 | 0.044 |
| B - 3 | O-3 | 3.5 | IMPRANIL DLP-R | 1550 | 10 | E1010/TEGO | 0.5/0.1 | 0.044 |
| B - 4 | O-2 | 3.5 | IMPRANIL DLH | 650 | 10 | E1010/TEGO | 0.5/0.1 | 0.044 |
| B - 5 | O-1 | 3.5 | TAKELAC W-6061 | 1050 | 10 | E1010/TEGO | 0.2/0.1 | 0.022 |
| B - 6 | O-1 | 3.5 | SUPERFLEX 460 | 750 | 15 | E1010/TEGO | 0.5/0.1 | 0.032 |
| B - 7 | O-2 | 3.5 | SUPERFLEX 460 | 750 | 10 | E1010/TEGO | 0.5/0.1 | 0.044 |
| B - 8 | O-3 | 3.5 | SUPERFLEX 460 | 750 | 10 | E1010/TEGO | 0.5/0.1 | 0.044 |
| B - 9 | O-1 | 3.5 | SUPERFLEX 460 | 750 | 10 | E1010/TEGO | 1.5/0.1 | 0.119 |
| B - 10 | O-3 | 3.5 | SUPERFLEX 460 | 750 | 10 | E1010/TEGO | 0.1/0.1 | 0.015 |
| B - 11 | O-1 | 3.5 | SUPERFLEX 420 | 290 | 10 | E1010/TEGO | 0.1/0.1 | 0.015 |
| B - 12 | O-1 | 3.5 | TAKELAC W-6010 | 380 | 10 | E1010/TEGO | 0.5/0.1 | 0.044 |

< Preparation of Pigment Ink B-13 >

A pigment ink B-13 was prepared in the same manner as the pigment ink B-2 except that the silicone acrylic resin was omitted and the amount of ion-exchanged water was adjusted so that the total amount was 100 parts by mass.

< Preparation of Pigment Ink B-14 >

A pigment ink B-14 was prepared in the same manner as the pigment ink B-2 except that a crosslinking agent (MEIKANATE NS-1) was added and the amount of ion-exchanged water was adjusted so that the total amount was 100 parts by mass.

3. Preparation of Second Treatment Liquid

< Preparation of Second Treatment Liquid C-1 >

The following components were mixed in an amount of 100% by mass to prepare a second treatment liquid C-1.

Resin dispersion Q-2: 10 parts by mass
CHALINE E-370 (silicone acrylic resin manufactured by Nissin Chemical Industry Co., Ltd.): 0.5 parts by mass
Glycerin: 10 parts by mass
Propylene glycol: 20 parts by mass
Proxel GXL(S) (preservative): 0.1 parts by mass
OLFINE E1010 (surfactant manufactured by Nissin Chemical Industry Co., Ltd.): 0.1 parts by mass
Ion-exchanged water: 59.30 parts by mass

< Preparation of Second Treatment Liquids C-2 to C-6 >

The type of the resin dispersion, and the types and parts by mass of the silicone acrylic resin and the nonionic surfactant were changed as shown in Table 4. Next, the amount of the ion-exchanged water was adjusted so that the total amount was 100 parts by mass. Other than that, second treatment liquids C-2 to C-6 were prepared in the same manner as in the case of C-1. The nonionic surfactant is a nonionic surfactant.
The compositions of the second treatment liquids C-1 to C-6 are shown in Table 4.

[Table 4]

TABLE IV

| SECOND TREATMENT LIQUID | RESIN DISPERSION | | | SILICONE ACRYLIC RESIN | | NONIONIC SURFACTANT | |
|---|---|---|---|---|---|---|---|
| | TYPE | FILM ELONGATION | PARTS BY MASS | TYPE | PARTS BY MASS | TYPE | PARTS BY MASS |
| C - 1 | SUPERFLEX 460 | 700 | 10 | CHALINE E-370 | 0.5 | E1010 | 0.1 |
| C - 2 | TAKELAC W-6061 | 1050 | 10 | CHALINE E-370 | 0.5 | E1010 | 0.1 |
| C - 3 | TAKELAC W-6010 | 380 | 10 | CHALINE E-370 | 0.5 | E1010 | 0.5 |
| C - 4 | TAKELAC W-6061 | 1050 | 10 | CHALINE E-370 | 0.5 | E1010 | 0.1 |
| C - 5 | TAKELAC W-6061 | 1050 | 10 | CHALINE E-790 | 0.5 | E1010 | 0.1 |

(continued)

| SECOND TREATMENT LIQUID | RESIN DISPERSION | | | SILICONE ACRYLIC RESIN | | NONIONIC SURFACTANT | |
|---|---|---|---|---|---|---|---|
| | TYPE | FILM ELONGATION | PARTS BY MASS | TYPE | PARTS BY MASS | TYPE | PARTS BY MASS |
| C - 6 | TAKELAC W-6061 | 1050 | 10 | - | - | E1010 | 0.1 |

4. Image Formation and Evaluation

4-1. Inkjet Textile Printing Image Formation

As the textile, cotton satin (100% cotton, product name: 60 cotton satin, manufactured by Okadaya Co., Ltd.) was prepared. A printing method of the inkjet head in the inkjet textile printing apparatus was a scanning method, and Pro120 manufactured by Konica Minolta, Inc. equipped with an inkjet head KM1024i (Konica Minolta Inc.) was used. A first treatment liquid head filled with the first treatment liquid A, a head filled with the pigment ink C, and a second treatment liquid head filled with the second treatment liquid B were used. Next, the treatment liquids and the ink were applied onto the textile by an inkjet method and then dried, thereby obtaining an inkjet textile printing image formed product. The first treatment liquid, the pigmented ink, and the second treatment liquid were ejected from the inkjet head at 540 dpi in the main scanning direction and 720 dpi in the sub-scanning direction. Note that dpi represents the number of ink droplets (dots) per 2.54 cm. The ejection frequency was set to 22.4 kHz. An image was produced in four passes (four movements or scans). Then, the image was dried at 150°C for 3 minutes by a belt-conveying dryer to obtain a 100% solid textile printing image formed product of 200 mm × 200 mm. Note that the application amounts of the first treatment liquid, the pigmented ink, and the second treatment liquid were 15 g/m$^2$, 15 g/m$^2$ and 15 g/m$^2$, respectively. These application amounts were obtained from the ejection amounts of the treatment liquids and the pigment ink.

[Evaluation of Color Developability]

The surface reflectance of the printed solid image was measured with a spectrophotometer CM-25d (Konica Minolta, Inc.), and the K/S value at 540 nm was calculated. The K/S value is an index of surface color density defined by the following formula.

$$\text{Kubelka-Munk formula: } K/S = (1-R)^2/2R$$

(K: absorption coefficient of light, S: scattering coefficient of light, R: surface reflectance)

The larger the K/S value, the higher the color density, and the smaller the K/S value, the lower the color density. Based on the calculated K/S value, the color developability was evaluated according to the following criteria. According to the following criteria, A and B were regarded as acceptable.

Evaluation Criteria

A: The K/S value is 5.0 or more.
B: The K/S value is 4.0 or more and less than 5.0.
C: The K/S value is 3.0 or more and less than 4.0.
D: The K/S value is less than 3.0.

[Evaluation of Wet Friction Fastness]

The wet friction fastness of the image formed on the textile was evaluated with a crock meter (friction tester type I) in accordance with the wet test of JIS L 0849.

Specifically, friction was applied to a 100 mm x 100 mm region of the formed image by rubbing the region back and forth 100 times with a white cotton cloth for rubbing under a load of 200 g. The white cotton cloth for rubbing was a white cotton cloth that was wetted with water to approximately 100% wet. After the rubbing, color transfer to the white cotton cloth

for rubbing was observed, and the wet friction fastness was evaluated according to the following criteria. The results are as listed in Table 5. According to the following criteria, A and B were regarded as acceptable. The color change criterion is a criterion based on a gray scale for contamination. For example, "Grade 1" is an evaluation result indicating that the degree of contamination is the greatest.

Evaluation Criteria

A: The degree of color change is Grade 3 or smaller (Grade 3, 4, or 5).
B: The degree of color change is somewhere between Grade 3 and Grade 2 (excluding Grade 3 and Grade 2).
C: The degree of color change is Grade 2.
D: The degree of color change is somewhere between Grade 2 and Grade 1 or Grade 1 (excluding Grade 2).

[Ejection Stability (Ejection Property)]

Under conditions of 25°C and 50% RH, the prepared pigment ink was ejected by a line method with a fixed KM1024iMHE manufactured by Konica Minolta, Inc. under ejection conditions of a droplet ejection volume of 13 pL. After it was confirmed at the start of ejection that the filled pigment ink was ejected from all 60 nozzles, the pigment ink was continuously ejected for 60 minutes. After completion of the 60-minute continuous ejection, the number of nozzles that had been able to eject to the end (the number of ejection nozzles after completion of the 60-minute continuous ejection) was counted. The evaluation criteria were as follows. The results are as listed in Table 5. According to the following criteria, A and B were regarded as acceptable.

Evaluation Criteria

A: The number of ejection nozzles after completion of the 60-minute continuous ejection is 60.
B: The number of ejection nozzles after completion of the 60-minute continuous ejection is 55 or more and less than 60.
C: The number of ejection nozzles after completion of the 60-minute continuous ejection is 50 or more and less than 55.
D: The number of ejection nozzles after completion of the 60-minute continuous ejection is less than 50.

Table 5 shows the evaluation results of the ejection properties of the image formed products and the pigment inks of Examples 1 to 12 and Comparative Examples 1 to 5. In Table 5, the term "ratio (surfactant/(pigment + resin))" means "ratio of "the nonionic surfactant" to "the total amount of the pigment, the anionic pigment dispersant, and the anionic resin particles".

[Table 5]

TABLE V

| | *1 | PIGMENT INK | | | | | | | SECOND TREATMENT LIQUID | | | | | | EVALUATION | | |
|---|---|---|---|---|---|---|---|---|---|---|---|---|---|---|---|---|---|
| | FORMULA | FORMULA | *2 | RESIN DISPERSION | | OTHERS | | RATIO (SURFACTANT/ (PIGMENT + RESIN)) | FORMULA | RESIN DISPERSION | | SILICONE ACRYLIC RESIN | | SURFACTANT | *3 | WET FRICTION FASTNESS | EJECTION PROPERTY |
| | | | | FILM ELONGATION (%) | PARTS BY MASS | CONTAINED | PARTS BY MASS | | | FILM ELONGATION (%) | PARTS BY MASS | CONTAINED | PARTS BY MASS | PARTS BY MASS | | | |
| EXAMPLE 1 | A-1 | B-1 | 0-2 | 700 | 10 | - | 0.0 | 0.096 | C-1 | 700 | 10 | YES (NOTE 1) | 0.5 | 0.1 | B | B | B |
| EXAMPLE 2 | | B-2 | O-1 | 750 | 10 | - | 0.0 | 0.044 | C-2 | 1050 | 10 | YES (NOTE 1) | 0.5 | 0.1 | A | A | A |
| EXAMPLE 3 | | B-3 | O-3 | 1550 | 10 | - | 0.0 | 0.044 | C-3 | 380 | 10 | YES (NOTE 1) | 0.5 | 0.5 | B | B | A |
| EXAMPLE 4 | | B-4 | 0-2 | 650 | 10 | - | 0.0 | 0.044 | C-4 | 1050 | 10 | YES (NOTE 1) | 0.5 | 0.1 | B | A | A |
| EXAMPLE 5 | | B-5 | O-1 | 1050 | 10 | - | 0.0 | 0.022 | C-5 | 1050 | 10 | YES (NOTE 2) | 0.5 | 0.1 | A | A | B |
| EXAMPLE 6 | | B-6 | O-1 | 750 | 15 | - | 0.0 | 0.032 | C-2 | 1050 | 10 | YES (NOTE 1) | 0.5 | 0.1 | B | A | B |
| EXAMPLE 7 | | B-7 | O-2 | 750 | 10 | - | 0.0 | 0.044 | C-2 | 1050 | 10 | YES (NOTE 1) | 0.5 | 0.1 | B | A | A |
| EXAMPLE 8 | | B-8 | O-3 | 750 | 10 | - | 0.0 | 0.044 | C-2 | 1050 | 10 | YES (NOTE 1) | 0.5 | 0.1 | A | A | A |
| EXAMPLE 9 | | B-13 | O-1 | 750 | 10 | (NOTE 4) | 0.0 | 0.044 | C-2 | 1050 | 10 | YES (NOTE 1) | 0.5 | 0.1 | A | A | B |
| EXAMPLE 10 | | B-14 | O-1 | 750 | 10 | YES (NOTE 3) | 1.0 | 0.044 | C-3 | 380 | 10 | YES (NOTE 1) | 0.5 | 0.1 | A | A | B |
| COMPARATIVE EXAMPLE 1 | | B-9 | O-1 | 750 | 10 | - | 1.0 | 0.119 | C-2 | 1050 | 10 | YES (NOTE 1) | 0.5 | 0.1 | B | D | C |

(continued)

| | *1 | PIGMENT INK | | | | | | | SECOND TREATMENT LIQUID | | | | | | EVALUATION | | |
|---|---|---|---|---|---|---|---|---|---|---|---|---|---|---|---|---|---|
| | FORMULA | FORMULA | *2 | RESIN DISPERSION | | OTHERS | | RATIO (SURFACTANT/ (PIGMENT + RESIN)) | FORMULA | RESIN DISPERSION | | SILICONE ACRYLIC RESIN | | SURFACTANT | *3 | WET FRICTION FASTNESS | EJECTION PROPERTY |
| | | | | FILM ELONGATION (%) | PARTS BY MASS | CONTAINED | PARTS BY MASS | | | FILM ELONGATION (%) | PARTS BY MASS | CONTAINED | PARTS BY MASS | PARTS BY MASS | | | |
| COMPARATIVE EXAMPLE 2 | | B-10 | O-3 | 750 | 10 | - | 0.0 | 0.015 | C-2 | 1050 | 10 | YES (NOTE 1) | 0.5 | 0.1 | C | B | D |
| COMPARATIVE EXAMPLE 3 | | B-11 | O-1 | 290 | 10 | - | 0.0 | 0.015 | C-2 | 1050 | 10 | YES (NOTE 1) | 0.5 | 0.1 | C | D | D |
| COMPARATIVE EXAMPLE 4 | | B-12 | O-1 | 380 | 10 | - | 0.0 | 0.044 | C-2 | 1050 | 10 | YES (NOTE 1) | 0.5 | 0.1 | A | C | A |
| COMPARATIVE EXAMPLE 5 | | B-5 | O-1 | 1050 | 10 | - | 0.0 | 0.022 | C-6 | 1050 | 10 | - | - | 0.1 | D | B | B |
| EXAMPLE 11 | A-2 | B-2 | O-1 | 750 | 10 | - | 0.0 | 0.044 | C-2 | 1050 | 10 | YES (NOTE 1) | 0.5 | 0.1 | B | A | A |
| EXAMPLE 12 | A-3 | B-2 | O-1 | 750 | 10 | - | 0.0 | 0.044 | C-2 | 1050 | 10 | YES (NOTE 1) | 0.5 | 0.1 | B | B | A |

NOTE 1: SILICONE ACRYLIC RESIN USED WAS CHALINE E-370 MANUFACTURED BY NISSIN CHEMICAL INDUSTRY CO., LTD. NOTE 2: SILICONE ACRYLIC RESIN USED WAS CHALINE E-790 MANUFACTURED BY NISSIN CHEMICAL INDUSTRY CO., LTD. NOTE 3: CROSSLINKING AGENT USED WAS MEIKANATE NS-1 MANUFACTURED BY MEISEI CHEMICAL WORKS, LTD. NOTE 4: CHALINE E-370 WAS NOT CONTAINED IN PIGMENT INK OF EXAMPLE 9.

*1: FIRST TREATMENT LIQUID *2: PIGMENT DISPERSION TYPE *3 COLOR DEVELOPABILITY

Industrial Applicability

According to the present invention, it is possible to provide an inkjet textile printing method capable of forming an image excellent in image density and wet friction fastness on a textile.

Although embodiments of the present invention have been described and shown in detail, the disclosed embodiments are made for purposes of illustration and example only and not limitation. The scope of the present invention should be interpreted by terms of the appended claims.

The entire disclosure of Japanese Patent Application No. 2024-069688 filed on April 23, 2024, is incorporated herein by reference in its entirety.

## Claims

1. An inkjet textile printing method comprising ejecting a pigment ink, a first treatment liquid, and a second treatment liquid onto a textile by an inkjet head in an order of the first treatment liquid, the pigment ink, and the second treatment liquid to attach the first treatment liquid, the pigment ink, and the second treatment liquid to a same place without drying, wherein:

    the first treatment liquid retains at least one of the pigment ink and the second treatment liquid on a surface of the textile;
    the first treatment liquid contains a water-soluble cationic flocculant;
    the second treatment liquid contains a silicone acrylic resin;
    the pigment ink contains a pigment, an anionic pigment dispersant, anionic resin particles having a film elongation of 600% to 1600%, and a nonionic surfactant; and
    a mass ratio of the nonionic surfactant to a total amount of the pigment, the anionic pigment dispersant, and the anionic resin particles is 0.022 or more and 0.096 or less.

2. The inkjet textile printing method according to claim 1, wherein the nonionic surfactant includes an acetylene-based surfactant.

3. The inkjet textile printing method according to claim 1 or 2, wherein the cationic flocculant includes a cationic polymer.

4. The inkjet textile printing method according to claim 1 or 2, wherein the pigment ink contains a silicone acrylic resin.

5. The inkjet textile printing method according to claim 1 or 2, wherein

    the anionic pigment dispersant contains a block copolymer,
    the block copolymer contains an ABA-type block copolymer including two hydrophilic blocks A disposed at both ends of the block copolymer and a hydrophobic block B disposed between the two hydrophilic blocks, and
    the hydrophilic block A interacts or reacts with the cationic flocculant.

6. The inkjet textile printing method according to claim 1 or 2, wherein the anionic resin particles include a urethane resin.

7. The inkjet textile printing method according to claim 1 or 2, wherein the pigment ink contains a crosslinking agent.

8. The inkjet textile printing method according to claim 3, wherein the cationic polymer includes a compound having a quaternary ammonium group.

9. An ink set for inkjet textile printing, comprising:

    a pigment ink;
    a first treatment liquid; and
    a second treatment liquid, wherein:

        the inkjet set is used for the inkjet textile printing in which the pigment ink, the first treatment liquid, and the second treatment liquid are ejected onto a textile by an inkjet head in an order of the first treatment liquid, the pigment ink, and the second treatment liquid to attach the first treatment liquid, the pigment ink, and the second treatment liquid to a same place without drying;

the first treatment liquid retains at least one of the pigment ink and the second treatment liquid on a surface of the textile;
the first treatment liquid contains a water-soluble cationic flocculant;
the second treatment liquid contains a silicone acrylic resin;
the pigment ink contains a pigment, an anionic pigment dispersant, anionic resin particles having a film elongation of 600% to 1600%, and a nonionic surfactant; and
a mass ratio of the nonionic surfactant to a total amount of the pigment, the anionic pigment dispersant, and the anionic resin particles is 0.022 or more and 0.096 or less.

**10.** An inkjet textile printing apparatus comprising:

an inkjet unit that ejects a pigment ink onto a textile while the inkjet unit is moved in a main scanning direction;
a first treatment liquid ejection head that is moved with the inkjet unit in the main scanning direction and ejects a first treatment liquid onto the textile;
a second treatment liquid ejection head that is moved with the inkjet unit in the main scanning direction and ejects a second treatment liquid onto the textile, the first treatment liquid ejection head and the second treatment liquid ejection head being disposed on both sides of the inkjet unit in the main scanning direction; and
an inkjet head that includes the inkjet unit, the first treatment liquid ejection head, and the second treatment liquid ejection head, wherein:

the pigment ink, the first treatment liquid, and the second treatment liquid are ejected onto the textile by the inkjet head in an order of the first treatment liquid, the pigment ink, and the second treatment liquid to attach the first treatment liquid, the pigment ink, and the second treatment liquid to a same place without drying;
the first treatment liquid retains at least one of the pigment ink and the second treatment liquid on a surface of the textile;
the first treatment liquid contains a water-soluble cationic flocculant;
the second treatment liquid contains a silicone acrylic resin;
the pigment ink contains a pigment, an anionic pigment dispersant, anionic resin particles having a film elongation of 600% to 1600%, and a nonionic surfactant; and
a mass ratio of the nonionic surfactant to a total amount of the pigment, the anionic pigment dispersant, and the anionic resin particles is 0.022 or more and 0.096 or less.

FIG.1

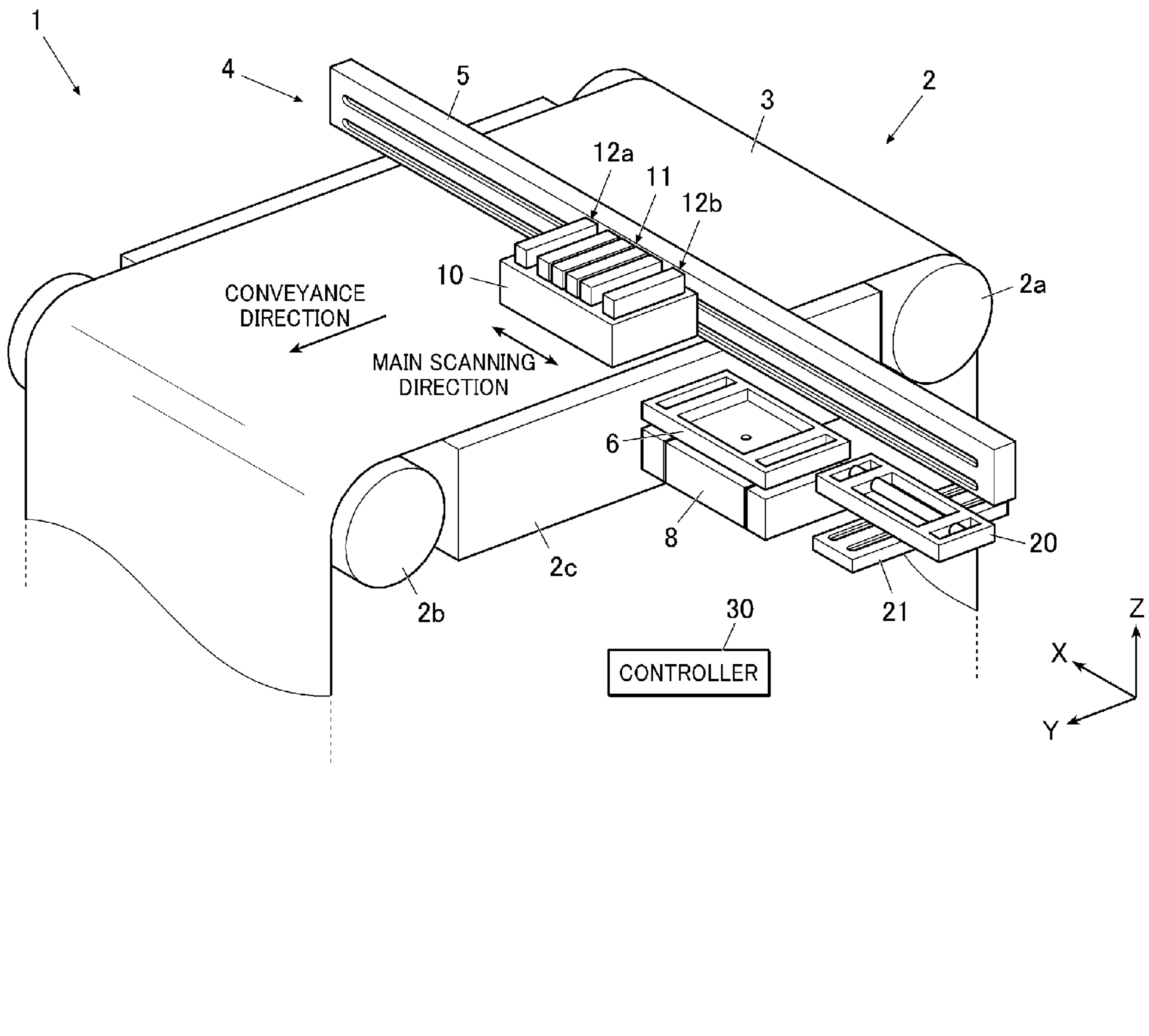

1
4
5
3
2
12a
11
12b
10
2a
CONVEYANCE DIRECTION
MAIN SCANNING DIRECTION
6
8
20
2c
21
2b
30
CONTROLLER
Z
X
Y

FIG.2

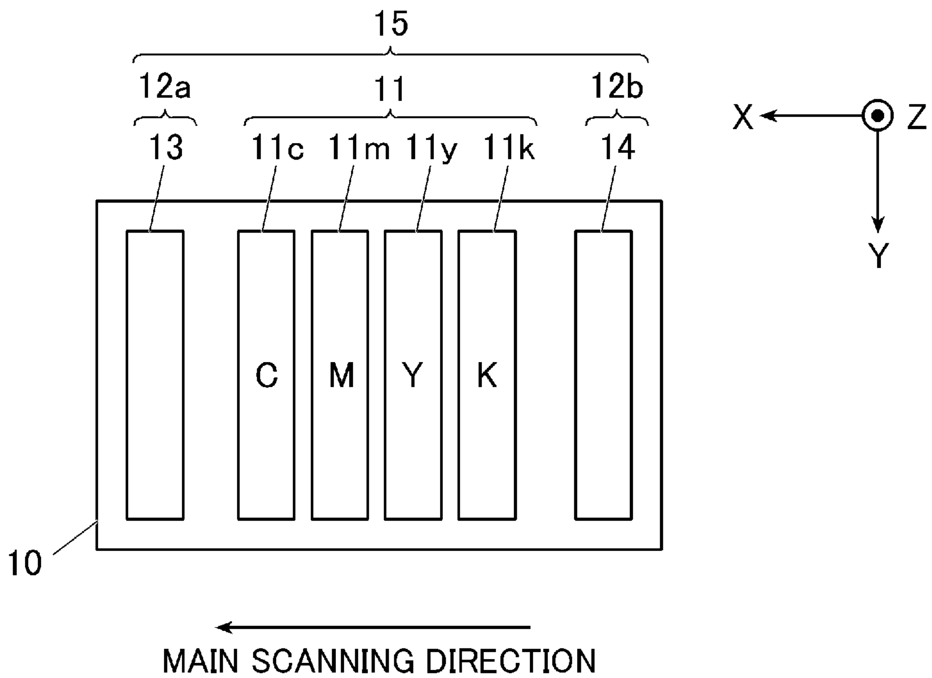
15
12a
11
12b
13
11c
11m
11y
11k
14
C
M
Y
K
10
X
Z
Y
MAIN SCANNING DIRECTION

FIG.3

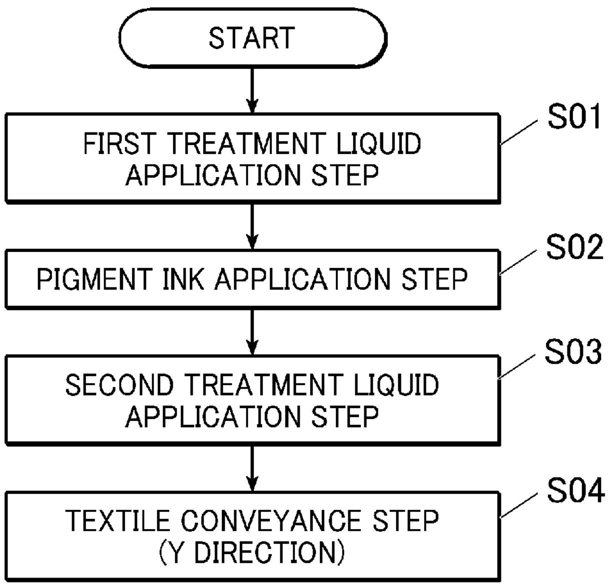
START
FIRST TREATMENT LIQUID APPLICATION STEP
S01
PIGMENT INK APPLICATION STEP
S02
SECOND TREATMENT LIQUID APPLICATION STEP
S03
TEXTILE CONVEYANCE STEP (Y DIRECTION)
S04

FIG.4

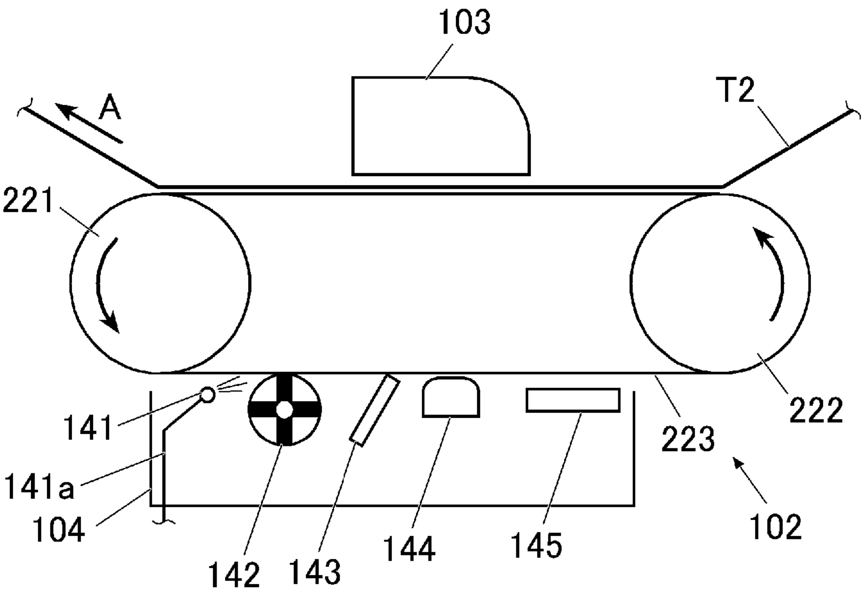

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*



### Patent documents cited in the description


- JP 2022003175 A
- JP 2017132946 A
- JP 2023179259 A
- JP 2024069688 A